# EUROPEAN PATENT SPECIFICATION

(11) **EP 0 594 625 B1**
(45) Date of publication and mention of the grant of the patent: **11.06.1997**
(21) Application number: 91917850.9
(22) Date of filing: 22.07.1991
(51) Int. Cl.: B64C 15/00

(54) **SUPERSONIC AIRCRAFT SHOCK WAVE ENERGY RECOVERY SYSTEM**
RÜCKGEWINNUNGANLAGE DER STOSSWELLEENERGIE EINES ÜBERSCHALLFLUGZEUGES
SYSTEME DE RECUPERATION DE L'ENERGIE DE L'ONDE DE CHOC D'UN AVION SUPERSONIQUE

(30) Priority: 23.07.1990 US 557418
(43) Date of publication of application: 04.05.1994
(73) Proprietor: VEHICLE RESEARCH CORPORATION, South Pasadena, CA 91030 (US)
(72) Inventor: RETHORST, Scott, C., South Pasadena, CA 91030 (US)
(74) Representative: Enskat, Michael Antony Frank
(86) International application number: US9105148
(87) International publication number: WO9201602

(56) References cited:
- US-A- 2 649 266
- US-A- 2 916 230
- US-A- 2 995 320
- US-A- 2 997 256
- US-A- 3 904 151
- US-A- 4 008 866
- US-A- 4 483 497
- US-A- 4 598 886

## Description

The present invention relates to compression wave energy control systems for supersonic aircraft.

US Patent No 4,483,497 discloses a manifold arranged to emit a planar jet at a velocity greater than that of flight and in the aft direction below and apart from a lifting wing. The energized jet fluid, supplied by the aircraft propulsion system, would be exhaust or bleed air from a turbojet/turbofan, a planar ramjet, or any other engine compatible with the aircraft propulsion requirements.

The gap between the wing underside and this jet constitutes a planar nozzle which at supersonic speed decreases the flow velocity with a corresponding increase in pressure. The upper jet interface generates a series of negative (counter clockwise) vortices whose strength is determined by the jet/gap velocity ratio. The lower jet interface generates a series of positive (clockwise) vortices whose strength is determined by the jet/free-stream velocity ratio. Since the gap flow velocity is less than that of the free stream, the vortices on the upper jet interface are stronger, and their excess strength can provide the required negative circulation reaction to the positive circulation developed by the lifting wing.

Effectiveness of the circulation reaction system provided by this underwing jet can be maximized by enhancing transformation of the residual energy of the jet which appears as linear velocity, into a rotational form, ie, by transforming the linear momentum into angular momentum. This transformed jet then provides a more effective reflection boundary to recover energy of the underwing compression waves.

In the system to be described hereinafter, the recovery of supersonic compression wave energy, generated by the lifting wing is effected by its reflection onto a suitably inclined structural surface to provide thrust and hence useful work.

Means are provided to selectively enhance mixing of the planar jet upper surface with the underwing gap flow to maximize the negative angular momentum or circulation reaction, preferably within the chord length of the wing. These means include but are not limited to acoustic, electrical, mechanical, laser, and geometric systems to induce resonance in the eddies formed on the upper jet interface and thereby accelerate the mixing process and vortex growth.

Such enhancement, by fully utilizing the available residual linear energy in the jet, will minimize both the mass and velocity of the jet fluid required from the engines, thereby providing the required negative reactive circulation with the least demands on the propulsion system. Further, reduced jet mass flow will minimize the size, weight, and drag of the underwing manifold itself.

Enhanced growth of the upper interface eddies by mixing will also provide the circulation reaction within the chord length of the wing, where the greater vortex growth rate presents a more favourable asymmetric boundary condition to increase the reflection of the underwing compression wave back upwards to maximize the pressure on the upwards reflexed wing backside to provide lift and thrust. This mixing at the same time spreads the momentum over a greater mass of air thereby serving as a form of jet augmentation, where the wing backside serves as the jet augmentation shroud.

Finally, the increased rotational momentum provided by this enhanced mixing augments the induced aft velocity of this upper vortex array as an expansion in the flow below, serving to cancel the forward velocity perturbation related to the compression imposed on the flow below the jet/vortex array due to its downward deflection. In fact, the jet/vortex array formed and discharged aft of the wing has essentially zero velocity with respect to the outer flow, and hence cannot form any waves.

These considerations thereby act in a sense to prevent the formation and propagation of shock waves to the ground to cause a sonic boom.

According to the present invention there is provided a compression wave energy control system for a supersonic winged aircraft said control system comprising a nozzle emitting a jet arranged to be located below and apart from the wing of the aircraft so as to intercept a compression wave from the wing and form a gap flow between the underside of the wing and the jet characterised by enhancement means located in said nozzle to emit pressure pulses of the same or harmonic frequency with a natural frequency of the interface eddies produced in an upper interface between the gap flow and the jet emerging from said nozzle to induce rotation of adjacent vortex pairs in said interface eddies to selectively increase the fluid mixing growth of the upper interface of the jet to provide an asymmetric shear layer.

A compression wave energy control system for a winged supersonic aircraft embodying the present invention will now be described, by way of example, with reference to the accompanying diagrammatic drawings, in which:

FIGS. 1a and 1b are schematic representations of the vortex patterns generated by both subsonic and supersonic wings, contrasting the circulation reaction requirements in these two flight regimes.

FIG. 2 is an illustration of the flow field generated by an example supersonic wing, delineating its shock and expansion waves and the vortex sheets produced by their intersections.

FIGS. 3a and 3b are a presentation of the wake characteristics calculated for the example wing of FIG. 2, illustrating the velocity defects imposed on the flow by the shock/expansion wave system, and FIG. 3c is a tabulation of resulting wake circulation reactions for comparison with the positive wing circulation developed as the wing advances a unit distance.

FIG. 4a is a schematic presentation of both the present shock-generating supersonic system and the new shock-free system, illustrating the turn reactions provided by the two systems, and FIG. 4b displays Crocco's Theorem which offers a mathematical explanation of how these systems differ.

FIG. 5 is a schematic illustration of the system of the present invention, showing the wing, underwing jet manifold, and high velocity aft jet with its upper and lower interface vortex arrays, where the upper jet interface vortex array displays enhanced flow mixing and wave reflection.

FIG. 6 is an illustration comparing the boundary conditions provided by the classical vortex sheet as presented in textbooks with the real fluid shear layer of the present embodiment.

FIGS. 7a and 7b are illustrations comparing reflection of supersonic waves from a conventional symmetric jet with that of an asymmetric jet provided by the action of a real fluid employing acoustic excitation.

FIG. 8 is a chart illustrating the dependence of reflected supersonic wave angles on the inclination of the reflecting surface.

FIG. 9 is a chart illustrating the increased compression wave reflection calculated for the enhanced mixing.

FIG. 10 is a chart showing the deformation and compression of a vortex adjacent to a solid wall, and illustrating how the wall may be represented by an image vortex.

FIG. 11 is a schematic illustration of how a deformed circular nozzle may be represented as a transformation of a linear supersonic nozzle.

FIG. 12 is a summary chart illustrating the velocity and pressure distributions of the upper and lower regions of the deformed vortex.

FIG. 13 is a mathematical representation for underwing supersonic compression wave reflection as the sum of three terms, together with graphical representations, showing the magnitudes of these terms as a function of operating parameters.

FIGS. 14a, b, c, d and e are schematic presentations of several electromechanical excitation mechanisms for the section of the underwing generator shown by lines 14-14 in FIG. 5 to induce resonance in the interface vortex array to enhance flow mixing and stimulate vortex growth.

FIGS. 15a, b, c, d, e, f, g and h are schematic illustrations of the supersonic vortex growth mechanism, showing how the vortices, excited by a pressure signal, rotate, pair, and merge to enhance growth. FIG. 15a also shows a receiver to measure the emerging frequency of the vortices and transmit this data to control the excitation frequency.

FIGS. 16a and 16b are comparisons illustrating the two systems, contrasting the negative wake of the conventional dissipative shock-generating system with the positive wake of the isentropic shock-free system of the present invention.

FIG. 17a is a schematic representation of the flow field aft and below the system of the present invention, illustrating the aft wash (expansion) induced by the dominant upper vortex array to cancel the forward wash (compression) associated with the wave system of the concave jet underside, providing a rotation-free downward momentum below the jet system generating lift with no sonic boom. FIG. 17b is a graphical representation of the ground pressure for the schematic of FIG. 17a.

FIG. 18a is a chart illustrating the shock-free mechanism in transforming the downward momentum function of a supersonic wing into a subsonic vortex array. FIG. 18b is a graphical representation of the ground pressure for the schematic 18a. FIG. 18c is an illustration of the mathematical transformation of the reaction system.

FIG. 19 is a profile view of an aircraft incorporating an underwing jet with enhancement provisions, and also illustrating forward wave containment and aft jet mixing arrangements to minimize fuselage wave drag.

FIGS. 19a and 19b are section views along lines 19A and 19B, respectively, in FIGS. 19a and 19b.

FIG. 20 is a schematic representation of a axisymmetric fuselage with a bow shock reflection ring, a shock wave control nose spike for off-design conditions, an energy recovery/thrust shoulder extending completely around the fuselage, and a jet flap discharging aft from the reflection ring.

FIG. 21 is a perspective view of a corporate jet size aircraft illustrating both the forward-fuselage ring, bow energy recovery system as well as the large-span, modest-swept wing with its underwing jet for wing compression energy recovery.

FIGS. 21a and 21b are section views along lines 21A and 21B, respectively, in FIG. 21. FIG. 21c is a front view of the embodiment of FIG 21.

FIGS. 22, 22a, 22b and 22c are section and front perspective views of a transport size aircraft illustrating the same features as in FIG. 21.

FIG. 23a is a depiction of conical bow shock with a retracted nose spike.

FIG. 23b is a depiction of the bow shock condition with the nose spike extended.

FIG. 23c is a chart illustrating use of the extendable nose spike to control interception of the conical bow shock wave by a forward fuselage bow ring at off-design conditions.

FIGS. 24, 24a, 24b and 24c are the perspective section and front views, respectively, of a transport size aircraft illustrating a parasol wing with engines located at the focus of its inward inclined compression waves so their exhaust can reflect these waves back to the upward reflexed backside of the wing for recovery into thrust.

### Detailed Description of the Preferred Embodiment

In the following paragraphs like numbers refer to the same or similar items from figure to figure.

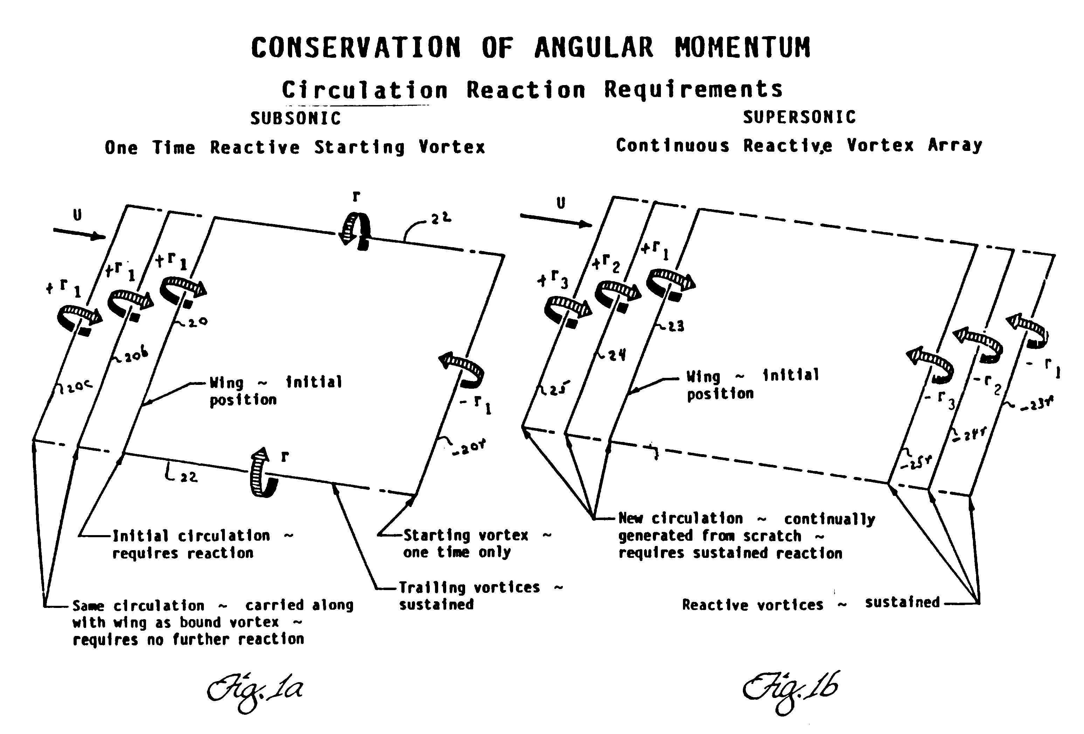

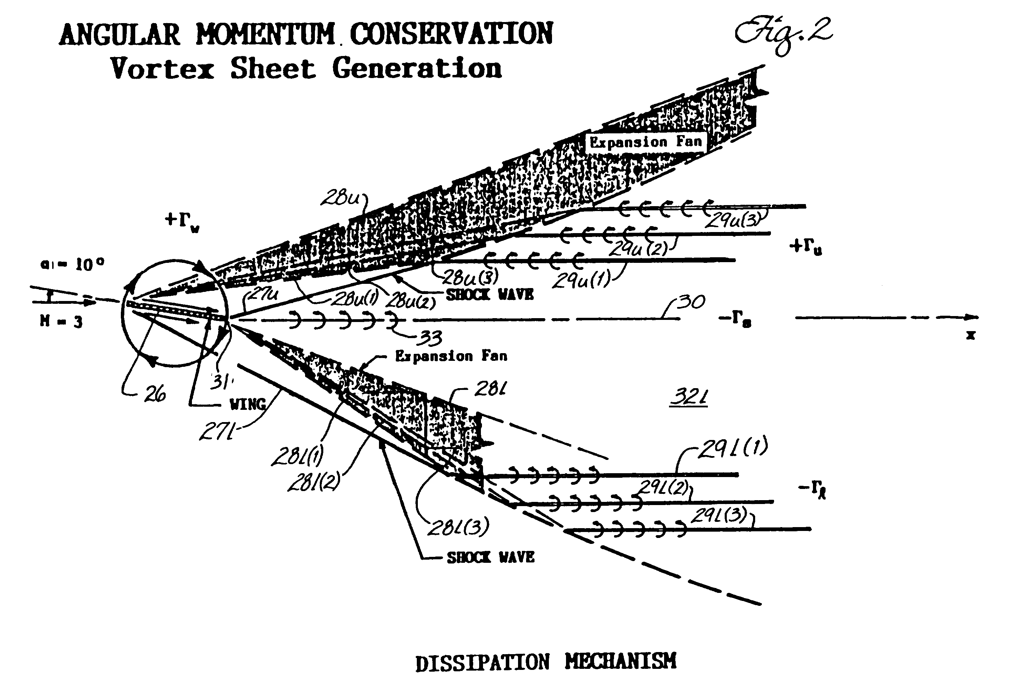

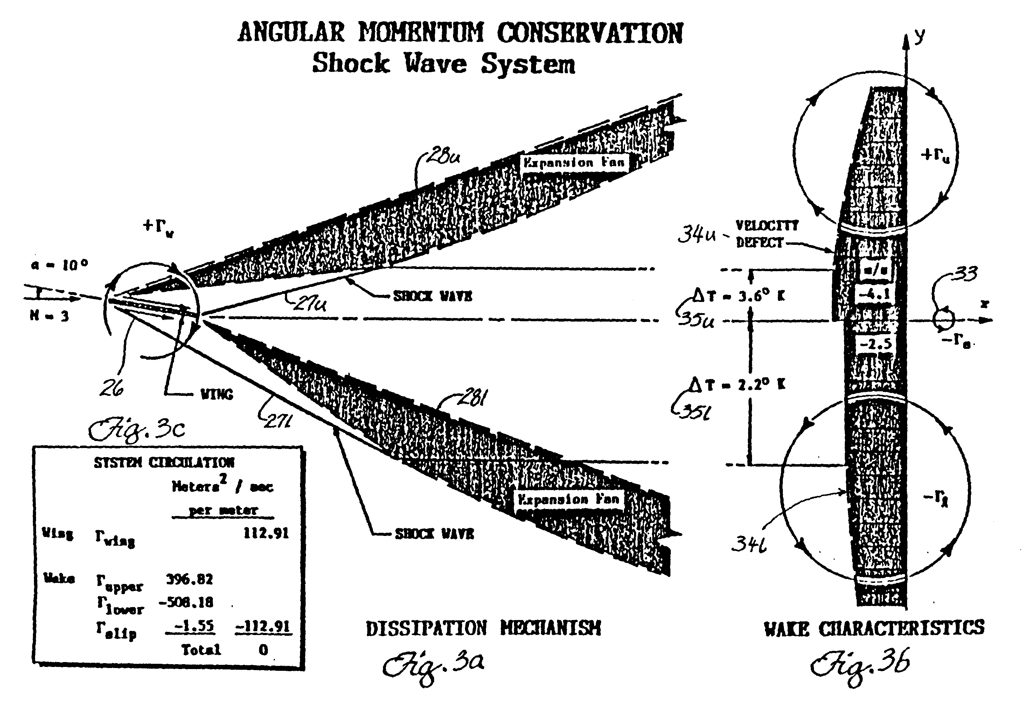

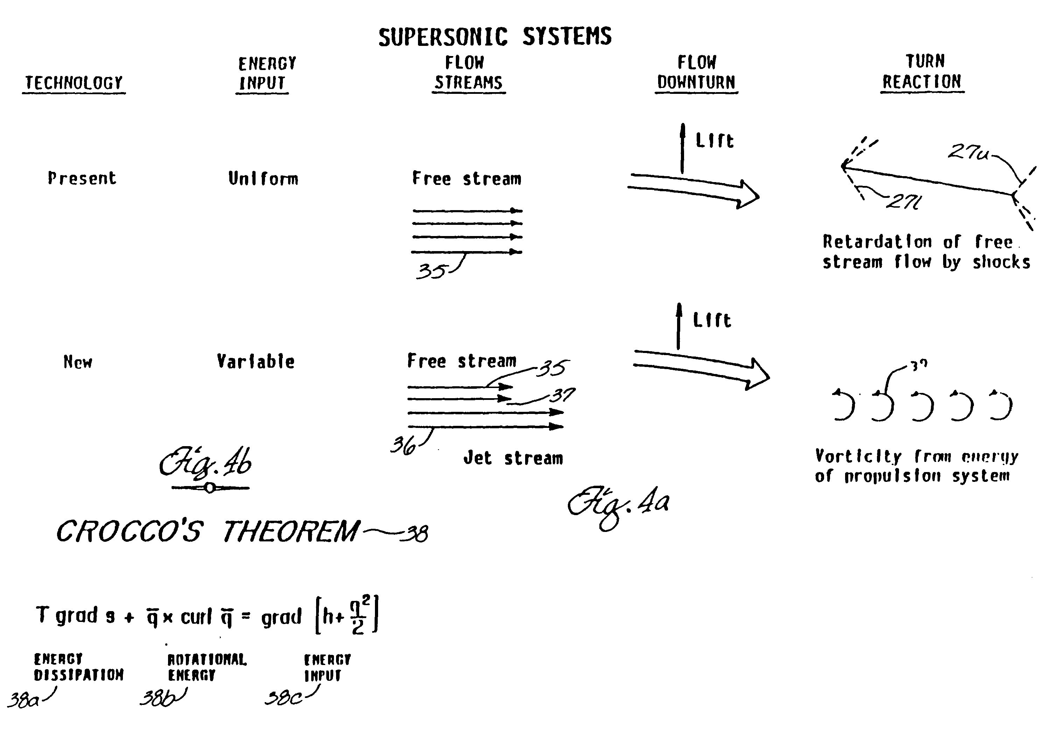

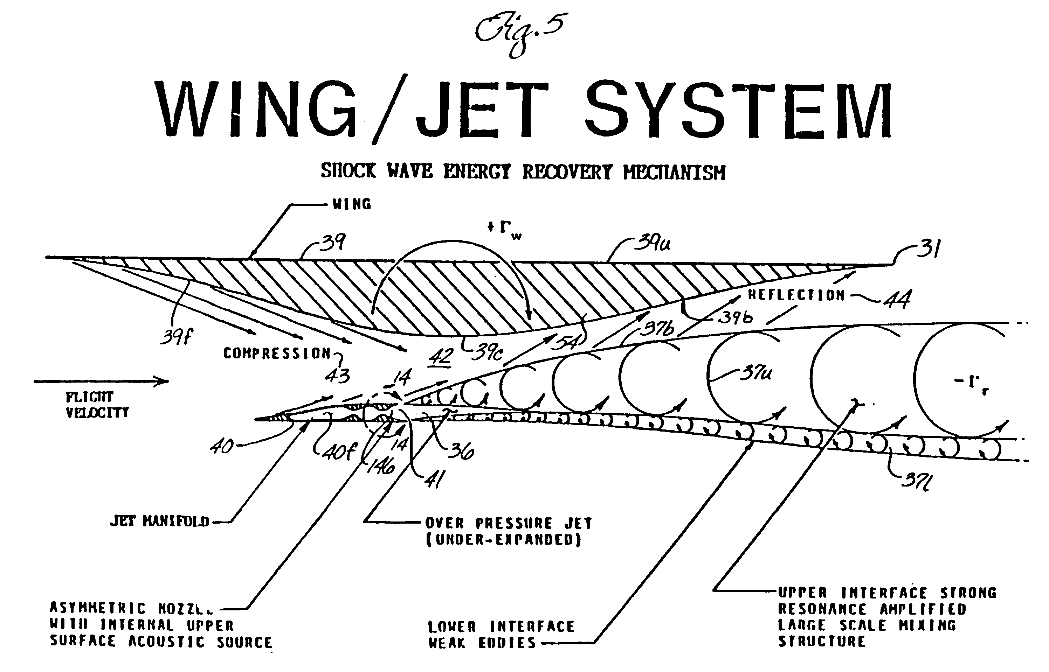

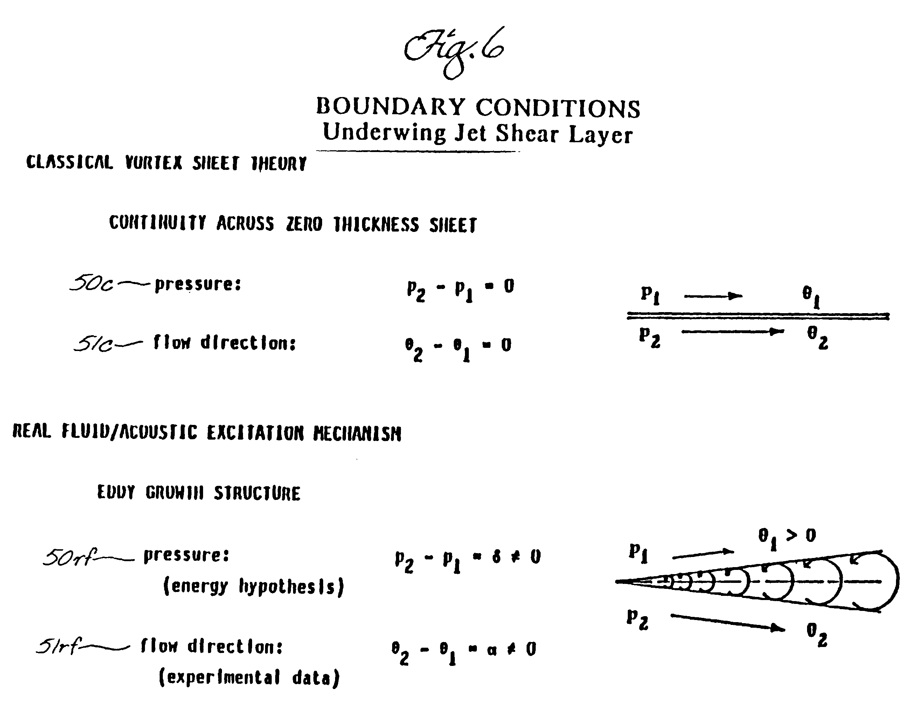

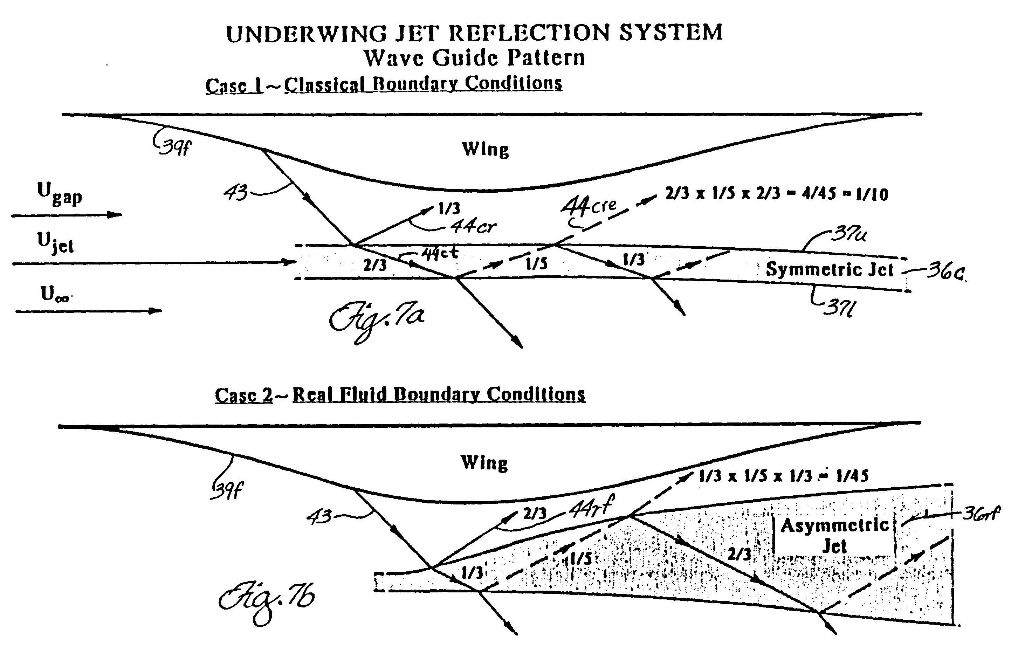

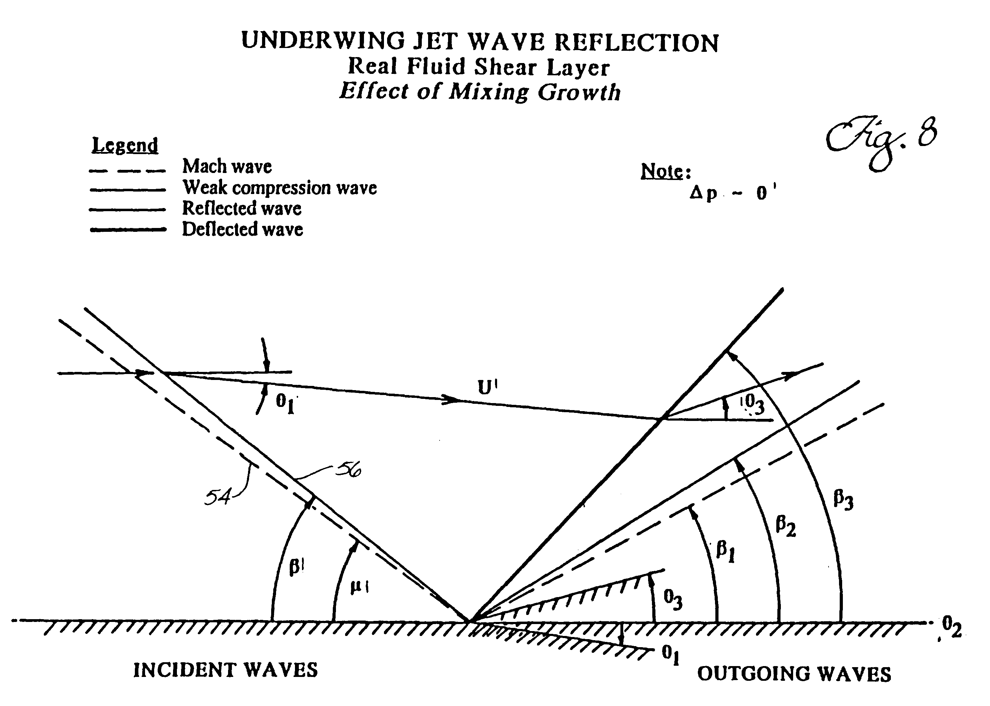

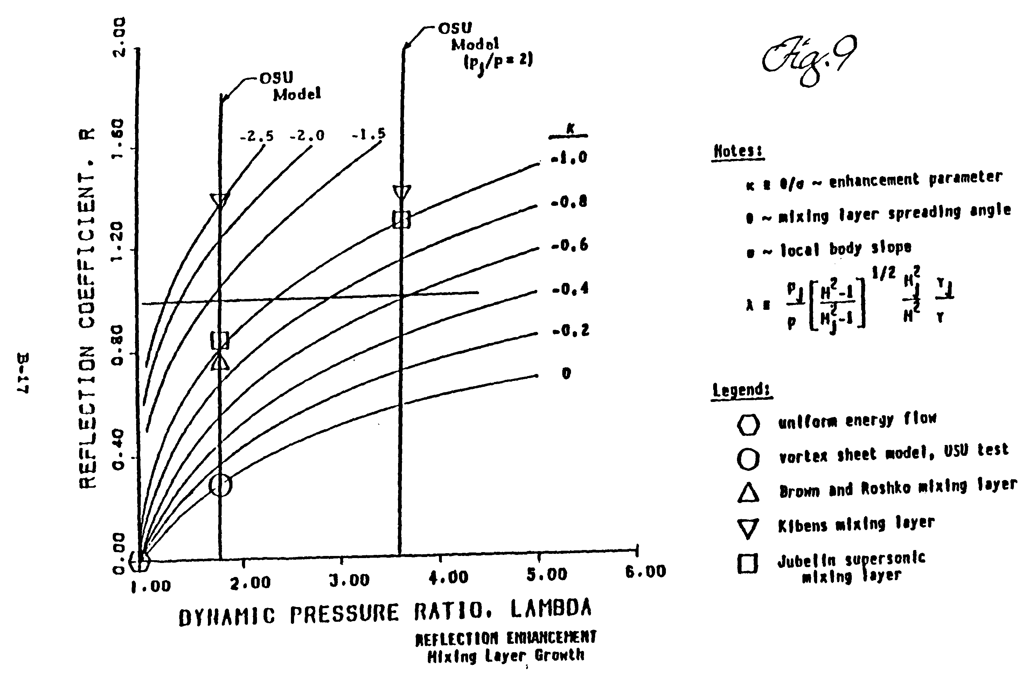

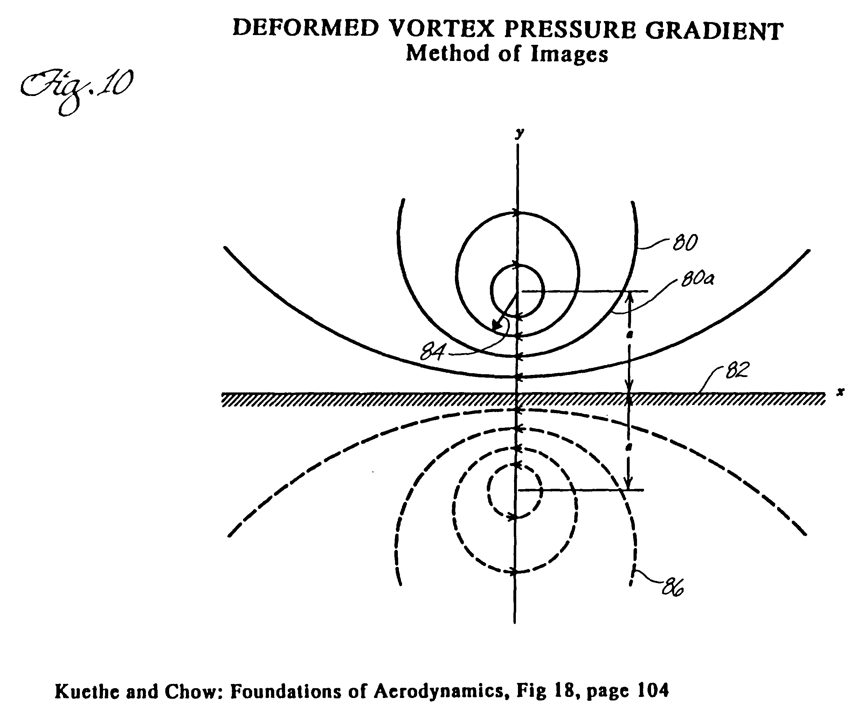

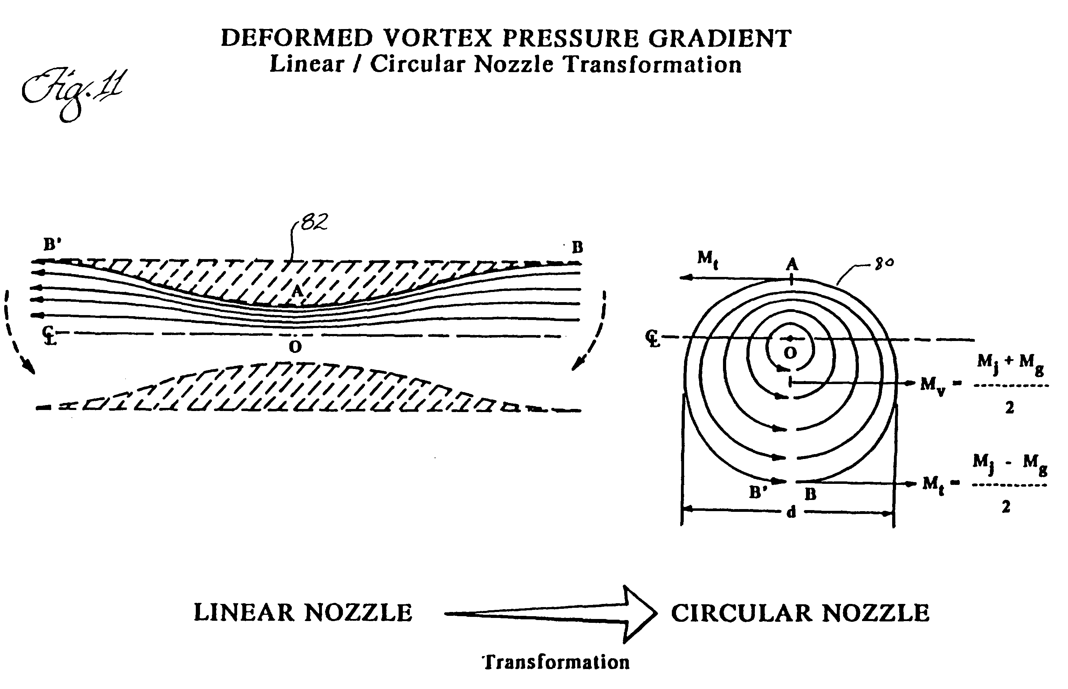

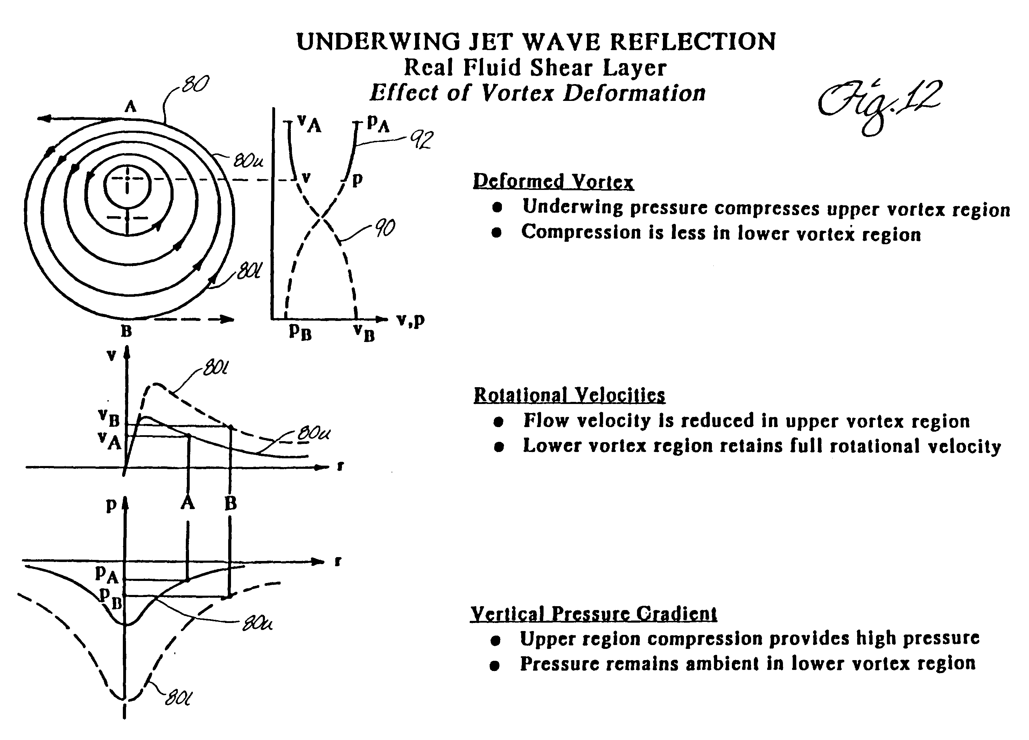

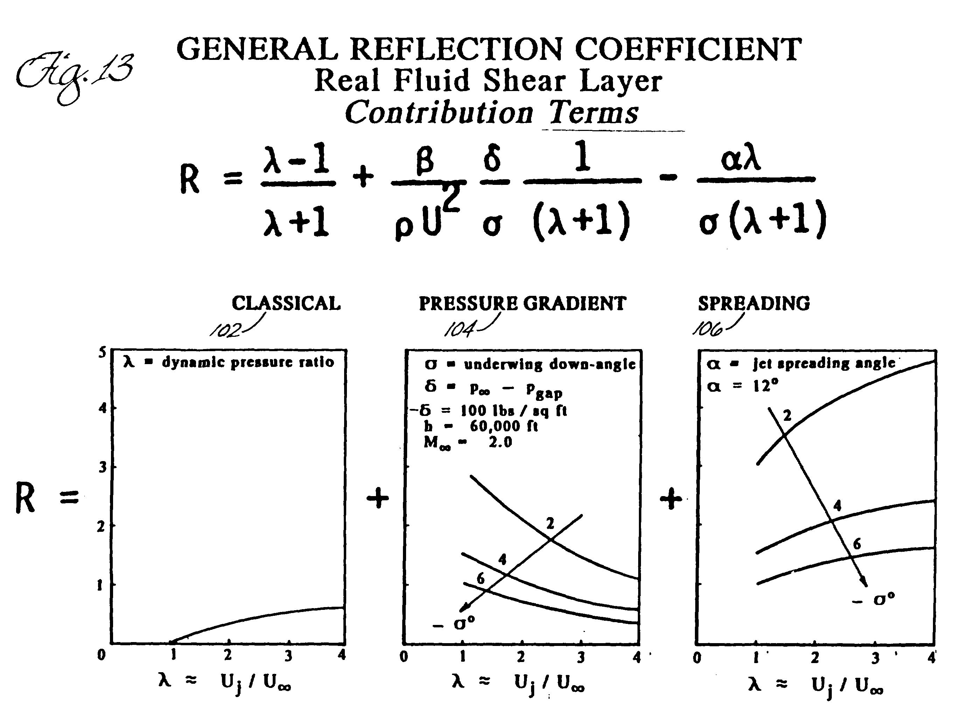

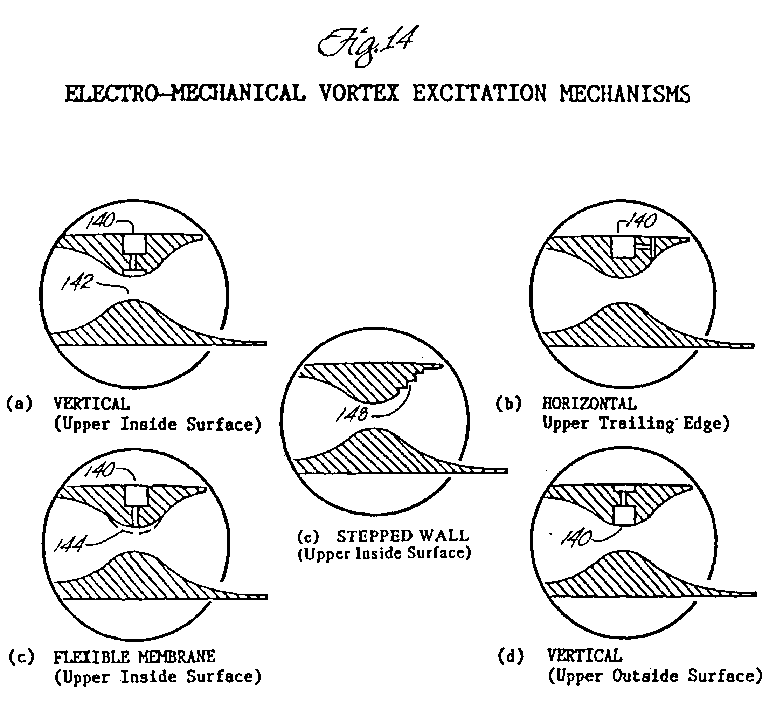

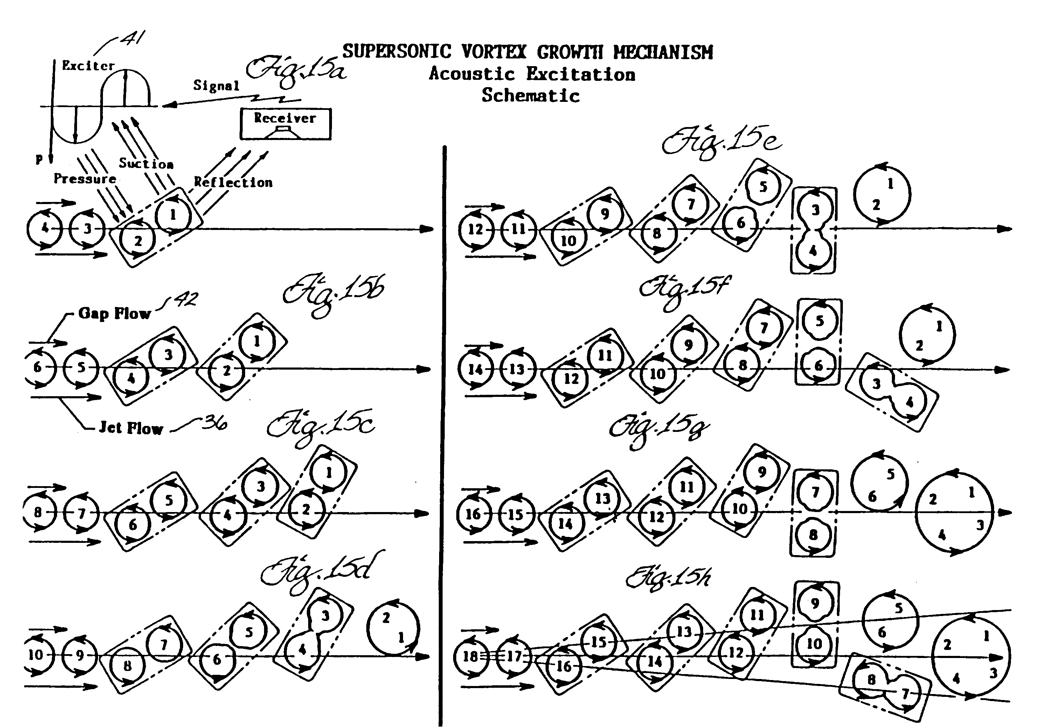

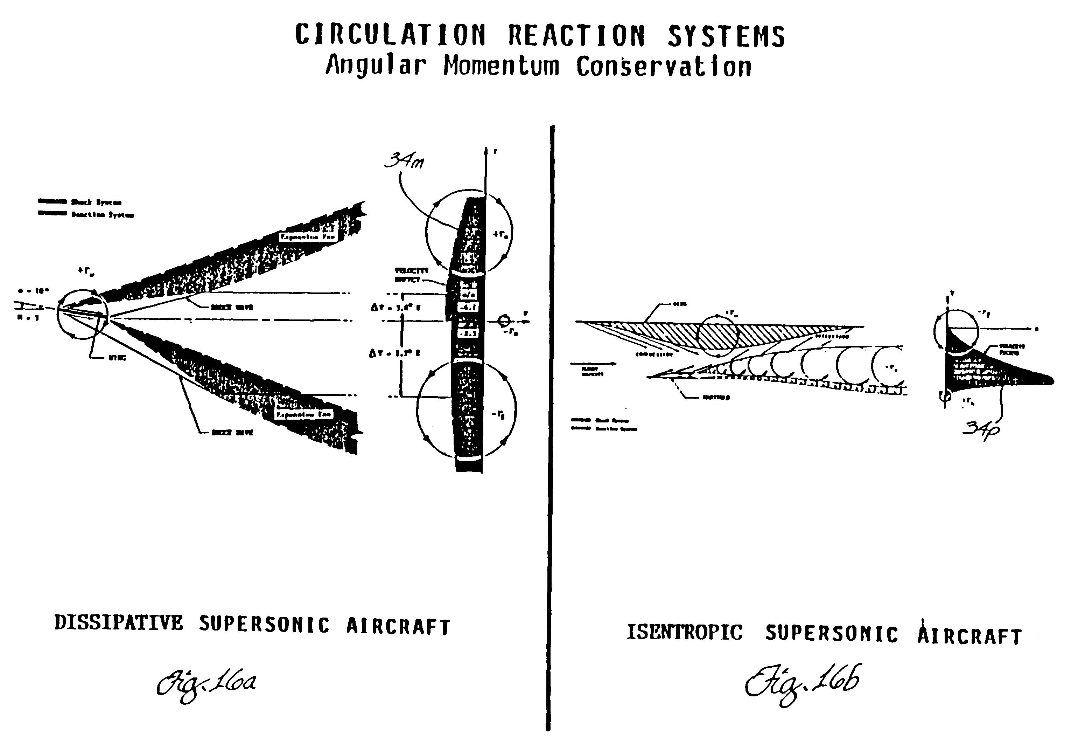

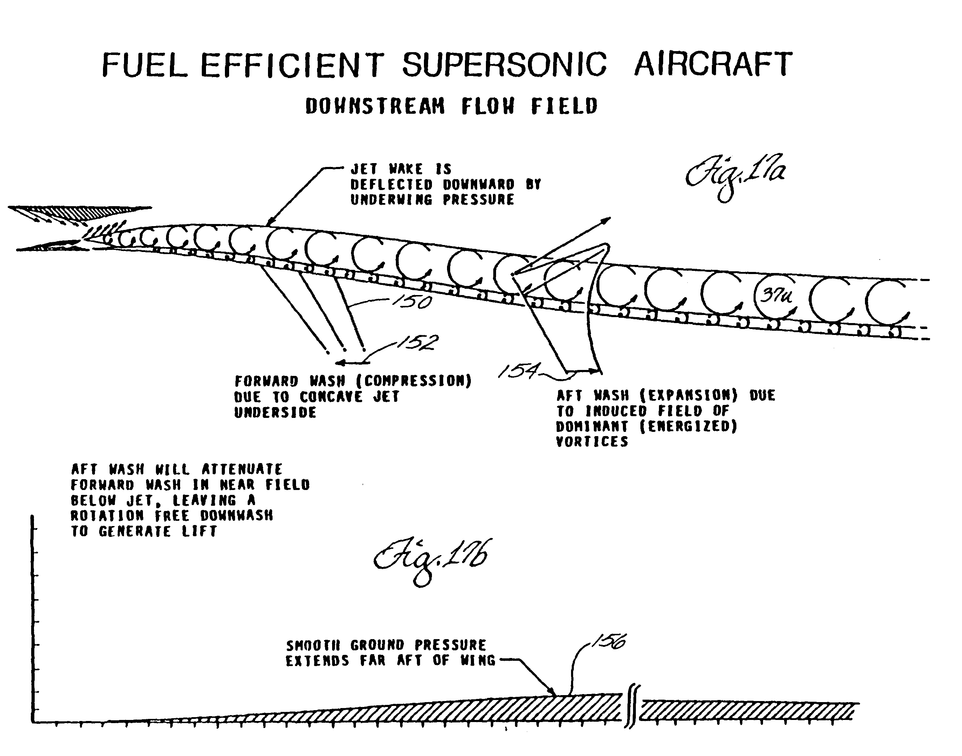

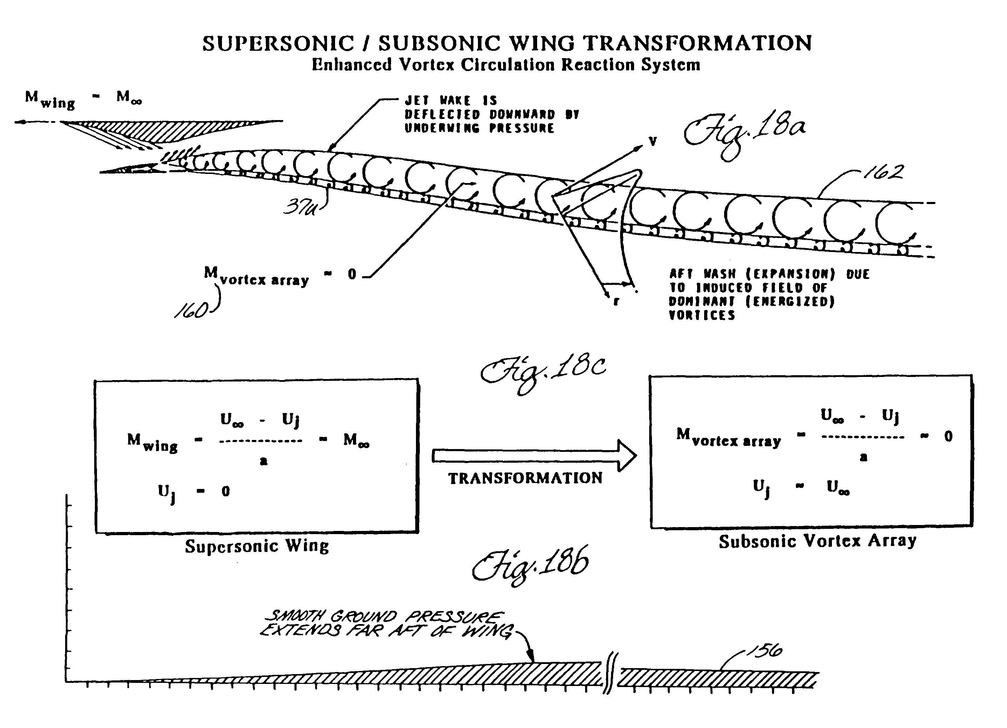

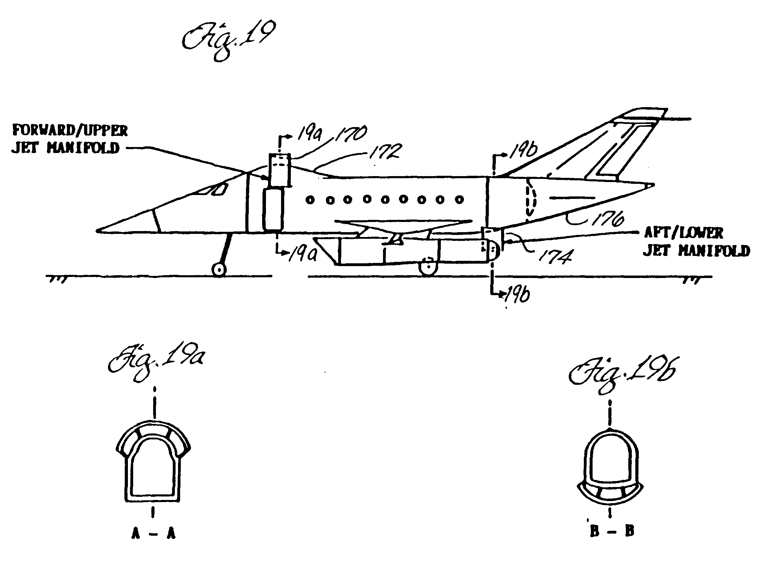

The basic circulation reaction requirements imposed on the flow by a lifting wing to satisfy conservation of angular momentum are illustrated in the schematic vortex patterns of FIG. 1 for both subsonic and supersonic speeds. The differing reaction systems shown follow from the restrictions on pressure transmission due to the speed of sound.

At subsonic speed the wing 20 initially turns a horizontal flow downwards to develop lift via a positive circulation +Γ₁. Conservation of angular momentum then requires an equal and opposite sign reactive circulation -Γ₁ which is represented as the so-called starting vortex -20r, with these two spanwise circulations connected by wing-tip trailing vortices 22 to produce a closed vortex ring. Thereafter, as the wing 20 moves forward, it is preceded by its own pressure field, generating a forward upwash, which the wing turns downward to develop the lift force. For a two-dimensional wing the upflow forward of the wing and the downflow aft of the wing are symmetric, so there is zero net downwash, the lift being produced by the change in linear momentum from-the forward upflow to the aft downflow.

Since the pressure field is thereby carried along with the wing as the same bound vortex +Γ₁, no further new circulation is developed, nor is any further reactive circulation required. The vortex ring, or rectangle, is thereafter simply stretched as the wing advances to positions 20b and 20c, leaving the initial starting vortex -Γ₁ far behind in the fluid.

At supersonic speed the pressure field generated by the lifting circulation +Γ₁ cannot precede the wing 23, which accordingly must continually turn the flow down from the horizontal to generate new positive circulations +Γ₂ and +Γ₃ as the wing advances. Conservation of angular momentum then requires sustained negative circulation reactions -Γ₂ and -Γ₃. Thus, the positive wing lift circulation 23 is reacted by negative circulation -23r, the positive wing lift circulation 24 is reacted by negative reactive circulation -24r, the positive wing lift circulation 25 is reacted by negative reactive circulation -25r, and so on. Again the spanwise lift and reactive vortices are connected by wing-tip trailing vortices, but now generating a series of new vortex rectangles -- a new rectangle for each unit distance of advance, rather than simply stretching the original vortex rectangle as in the subsonic case. Of course, the wing advance, its circulation development, and the vortex reactions are all smooth and continuous; the unit advance patterns cited are merely illustrative.

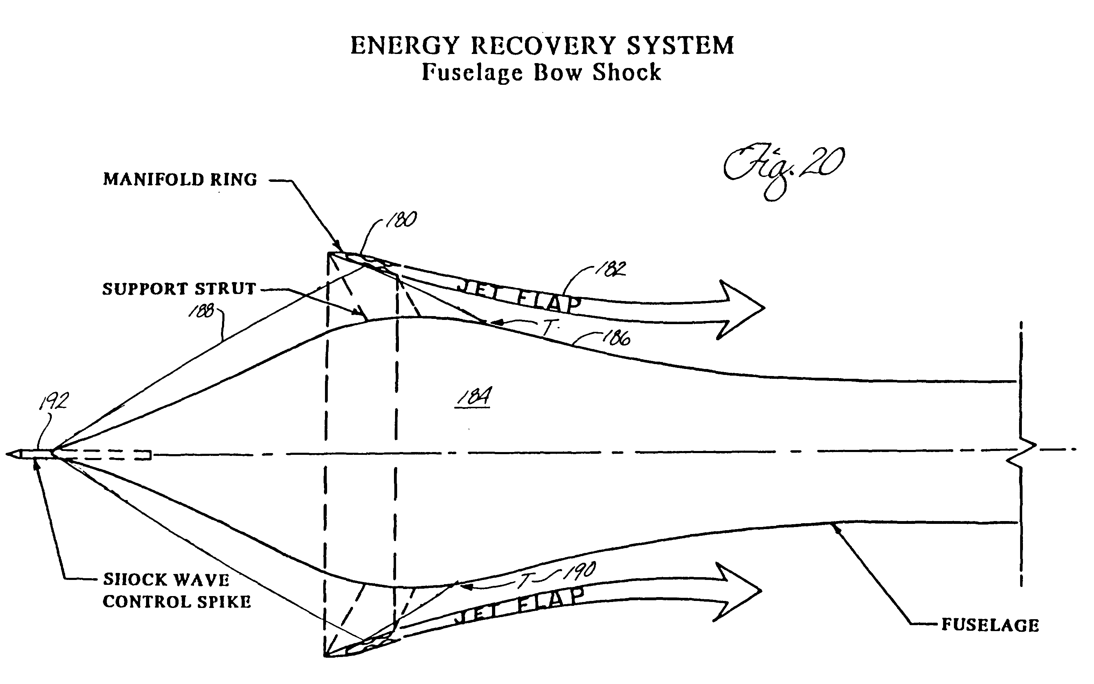

In FIG. 2 a flat plate wing 26 developing a positive lift circulation +Γ_{w} is illustrated generating shock waves 27ℓ and 27u from the lower and upper surfaces of the wing respectively. Expansion fans 28ℓ and 28u are also shown emanating from the wing lower and upper surfaces respectively.

Below the wing, intersections of the elements 28ℓ(1), 28ℓ(2), and 28ℓ(3) of the lower expansion fan 28ℓ with the lower shock wave 27ℓ generate vortex sheets 29ℓ(1), 29ℓ(2), and 29ℓ(3) respectively, whose sustained vortex arrays all have a negative (counterclockwise) sense of rotation.

Above the wing, intersections of the elements 28u(1), 28u(2), and 28u(3) of the upper expansion fan 28u with the upper shock wave 27u similarly generate sustained vortex sheets 29u(1), 29u(2), and 29u(3) respectively, but now the sense of rotation of these vortex arrays is positive (clockwise).

The slipstream 30 between the lower and upper flows aft of the wing trailing edge 31, due to the higher velocity in the lower flow 32ℓ, is also shown in FIG. 2 generating a further negative reactive vortex array 33.

The wake characteristics of the shock/expansion wave system of FIG. 2 are illustrated in FIGS. 3a and 3b. The shock waves 27ℓ and 27u are of uniform strength until intercepted by the expansion fans 28ℓ and 28u, degrading kinetic energy of the flow into heat, i.e., causing uniform velocity defects 34ℓ and 34u and temperature rises 35ℓ and 35u. When the expansion fans intercept the shock waves, the velocity defects progressively decrease, providing velocity variations, the integrals of which are the reactive circulations.

Thus below the wing 26, after interception of the shock wave 27ℓ by the expansion fan 28ℓ, the velocity defect 34ℓ decreases progressively in the negative y direction, providing a negative slope of the velocity profile, the integral of which is the required negative circulation reaction -Γ_{ℓ}. Surprisingly, for the Mach 3 wing at 10 degree angle of attack example case considered, calculations show that this negative circulation reaction -Γ_{ℓ} is almost five times that required to balance the positive wing lift circulation +Γ_{w}, as indicated by their circulation areas.

However, above the wing 26, after interception of the shock wave 27u by the expansion fan 28u, the velocity defect 34u decreases progressively in the positive y direction, providing a positive slope of the velocity profile, the integral of which is a large positive circulation reaction +Γᵤ, almost four times that of the wing circulation +Γ_{w}, again as indicated by their areas. This result explains the even larger negative circulation reaction -Γ_{ℓ} generated by the lower flow; it is required to balance this adverse upper flow reaction +Γᵤ as well as the positive wing circulation +Γ_{w}. This system for the example case generates eight times the reactions required, including both the positive and negative circulations, and hence dissipates eight times the energy necessary to balance the positive wing circulation. The result is the abnormally high wave drag of the shock-generating reaction system, and indicates that supersonic lift should be generated by the wing lower surface but not its upper surface.

The calculated value 33 of the slipstream negative circulation reaction -Γₛ is also shown; it is small, only about one percent of the wing circulation +Γ_{w}.

Circulation reactions to the positive circulation +Γ_{w} developed by a lifting wing, at both subsonic and supersonic speed, are provided by free vortices in the flow. At subsonic speed the one-time starting vortex is generated by the wing trailing edge 31. At supersonic speed, as illustrated in FIGS. 2 and 3, and summarized in FIGS. 4a and 4b, a wing in a uniform energy flow 35 employs intersections of the dissipative shock waves 27ℓ and 27u with the expansion fans 28ℓ and 28u to generate continuous free vortex arrays, both positive and negative as shown above, providing the net sustained negative circulation reaction required to balance the continuous generation of positive wing circulation. The new variable energy circulation reaction system employs residual energy from the propulsion system to provide a higher velocity jet stream 36 to generate this required sustained free vortex array 37 on the interface between the free stream 35 and jet stream 36.

The distinction between these two circulation reaction systems is illustrated by combining the conservation equations of mass, momentum, and energy into a single equation known as Crocco's Theorem 38, where
T = temperature
s = entropy
q = velocity
h = enthalpy

This three-term expression illustrates the two and only two possible supersonic circulation reaction systems. For the two dimensional wing considered, the second term 38b of this equation represents the vertical gradient of the rotational energy generated by a lifting wing in turning the flow downward. In a uniform energy flow 35 the third term 38c, representing the vertical gradient of the constant total enthalpy, is zero, and hence the circulation reaction, as demonstrated by the resulting two term equation, must be provided by the first term 38a, which represents the energy dissipation of the shock wave system 27. However, inclusion of the energized underwing jet 36 provides a non-uniform vertical enthalpy gradient and hence a non-zero right-hand term 38c, -which can balance the equation without a contribution from the shock-dissipative first term 38a, thereby achieving a shock-free circulation reaction.

This shock-free circulation reaction system of the present invention is displayed in FIG. 5, illustrating a cross section view of a shaped wing 39 having a flat upper surface 39u and a lower surface gently curved concave down in both its forward 39f and back 39b sections, connected by a convex center portion 39c, in all comprising the upper section of a supersonic nozzle. A manifold 40 is mounted below the wing emitting a high velocity planar jet 36 in the aft direction, generating vortex arrays 37ℓ and 37u on its lower and upper jet interfaces respectively. Vortex growth provisions 41 are incorporated in the upper surface of the manifold 40 to selectively enhance mixing of the upper jet interface eddies 37u of the jet 36 with the gap flow 42, providing the larger upper vortex array 37u shown.

The high velocity planar jet 36 is comprised of energized fluid provided by the propulsion system, such as exhaust or engine bleed air. This fluid may be ducted spanwise from the engines through the wing leading edge, providing thermal deicing, and/or in the forward plenum section 40f of the underwing manifold 40.

The enhanced growth of the upper interface vortex array 37u is a critical feature of the present invention. First, this vortex array is endowed with increased strength by its generation within the wing chord length where the slower underwing gap flow provides a greater velocity differential. The reduced velocity of the gap flow 42 is the driver for this mechanism, and it is available only within the wing chord length. Aft of the wing the jet is bounded by the free stream on both its interfaces, and hence the vortex strength is the same on both sides, i.e., the increase in circulation reaction strength on its upper side will vanish. Second, its enhanced mixing with the gap flow transforms a greater portion of the residual linear jet energy into rotational form. These two provisions thereby make more effective use of the available residual jet energy and generate more of the required negative circulation reaction than would otherwise occur.

The benefits of this enhanced vortex structure appear in several ways. First, it provides an improved boundary condition for the underwing flow. The enlarged upper vortex array 37u serves as a more effective pneumatic shield in reflecting a greater portion of the compression waves 43 generated by the forward concave-down wing underside 39f back upwards to increase the pressure on the wing backside 39b, providing a thrust component due to its upward reflex. From another point of view, the gap flow 42 is restricted by the vortex growth to a channel of lesser cross section, generating a higher pressure which is sustained to the wing trailing edge 31. Second, the enhanced mixing spreads the residual jet energy over a greater mass of air, providing a form of jet augmentation to increase the propulsive efficiency of the underwing jet, with the upwards reflexed wing backside 39b acting as the jet augmentation shroud. Third, the underwing jet/vortex array extends far aft of the wing providing a longer effective wing chord to improve lift efficiency.

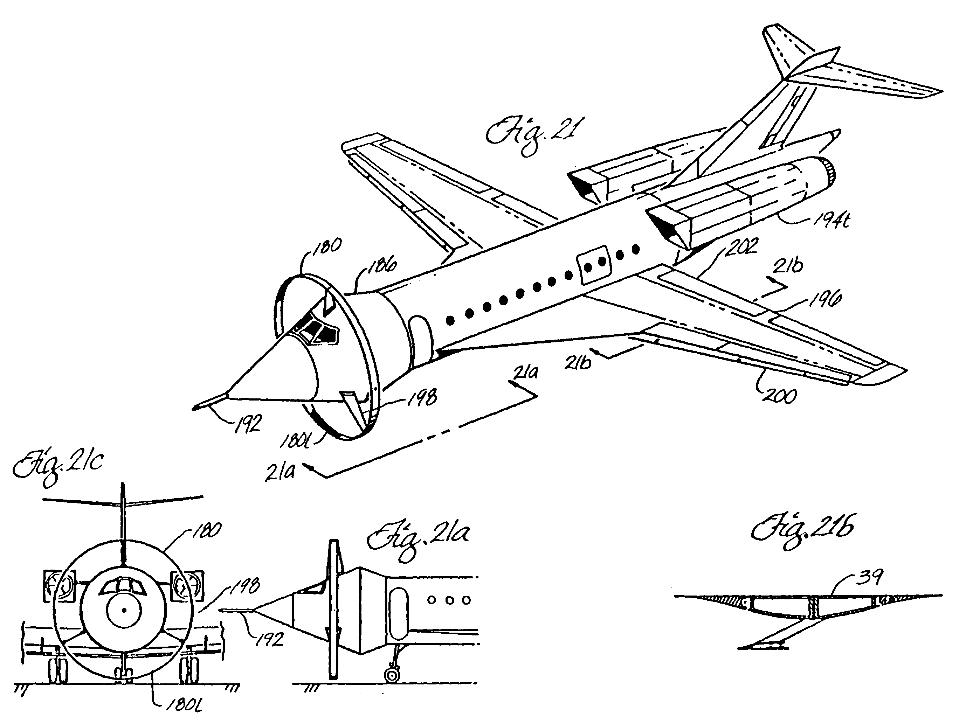

The vortex growth increases the wave reflection 44 by providing a diverging upper boundary 37b having improved reflection over the classical boundary. Wave reflection from a free surface or vortex sheet is normally represented by the classical boundary conditions which approximate the boundary as having infinitesimal thickness, with the pressures 50c and flow directions 51c the same on both sides of the sheet, as shown in the upper portion of FIG. 6. However, with enhanced mixing the vortices or eddies grow rapidly in the flow direction to finite size which can sustain a transverse pressure gradient 50rf by vortex deformation and produce flows on its two sides that diverge 51rf in direction, as shown in the lower portion of FIG. 6. These real fluid boundary conditions increase the reflection and hence recovery of the wing compression energy, compatible with the increased negative circulation reaction of the larger size vortices.

The underwing jet is shown in FIG. 7 for these two boundary conditions including example wave patterns illustrating the greater net reflection from the asymmetric jet:
Case 1 - Classical Boundary Conditions - Symmetric Jet
Case 2 - Real Fluid Boundary Conditions - Asymmetric Jet

For Case 1 an example is presented for a reasonable jet velocity of about twice the flight velocity. A compression wave 43 generated by the forward wing undersurface 39f encounters the upper surface 37u of the underwing jet 36. One third of the wave is reflected upwards from this classical symmetric jet 36c as a compression wave 44cr; two thirds is transmitted downwards into the jet as a compression wave 44ct at a lesser inclination due to its higher Mach number. On encountering the lower surface 37ℓ of the underwing jet 36, which is a weaker interface due to the lesser difference in velocities across its surface, only one fifth of the wave is reflected and this time as an expansion wave 44cre (shown dashed). This wave continues upwards, encountering again the stronger upper interface 37u, where as before one third is reflected and two thirds transmitted. The final upwards transmitted wave is an expansion having a strength which is the product of its precursors, or about one tenth, which detracts from the one-third initial compression reflection.

For Case 2 the same mechanism holds. But the real fluid boundary conditions of the asymmetric jet, for the same example where the jet has a velocity twice the flight velocity, provide an initial reflection of two thirds and a subsequent upwards transmitted expansion of one forty fifth, almost negligible. So the real fluid asymmetric jet 36rf gains in two ways, first by a greater initial reflection and second by a lesser subsequent expansion.

The mechanism of flow divergence due to mixing layer growth and inclination of the real fluid boundary is shown in FIG. 8. An incident Mach wave 54 at angle µ and an incident weak compression wave 56 at angle β are shown. The flow U turns through an angle Θ₁ on passing through the weak compression wave. The angles of the outgoing reflected waves are shown to depend on the inclination of the reflecting surface. For a surface inclined at the same angle Θ₁ as the flow U the wave will not reflect at all and instead be "absorbed", or sometimes is said to reflect as a Mach wave β₁. If the surface is not inclined, shown as Θ₂, the weak compression wave will reflect at an angle β₂ similar to the angle of incidence β. A surface inclined upwards, say at an angle Θ₃ as shown, provided by a real fluid diverging asymmetric jet, will reflect at an increased angle β₃ and turn or deflect the flow U upwards at a corresponding angle Θ₃, with a proportional increase in pressure. This pressure increase will also deflect the underwing vortex flap downwards to a greater extent, thereby increasing the downward momentum imparted to the flow below.

This increase in pressure due to vortex spreading is shown in the chart of FIG. 9, which is a plot of the reflection coefficient R versus the dynamic pressure ratio λ of the two streams. In this plot, which considers only the flow spreading real fluid boundary condition 51rf, the parameter κ is the ratio of the vortex spreading angle Θ to the downward angle σ of the forward wing undersurface 39f. The plot shows that for a unit value of this ratio *κ,* which corresponds to a vortex spreading angle equal to the undersurface slope, and for a dynamic pressure ratio λ of 1.85, the reflection is increased by a factor of three over the value for the classical boundary.

The increase in reflection due the ability of a real fluid shear layer 36rf to sustain a pressure gradient depends on vortex deformation, as illustrated in FIG. 10. In this figure, taken from a standard textbook, a vortex 80 is shown in the proximity of a solid wall 82, where the vortex is deformed to a greater extent in its side 80a adjacent the wall. This greater deformation reduces the radii of curvature 84 of the rotating flow in the compressed region, increasing the centrifugal force, which is balanced there by a greater pressure gradient. FIG. 10 also illustrates that the solid wall 82 can be replaced by an image vortex 86 to facilitate calculation of the flow field.

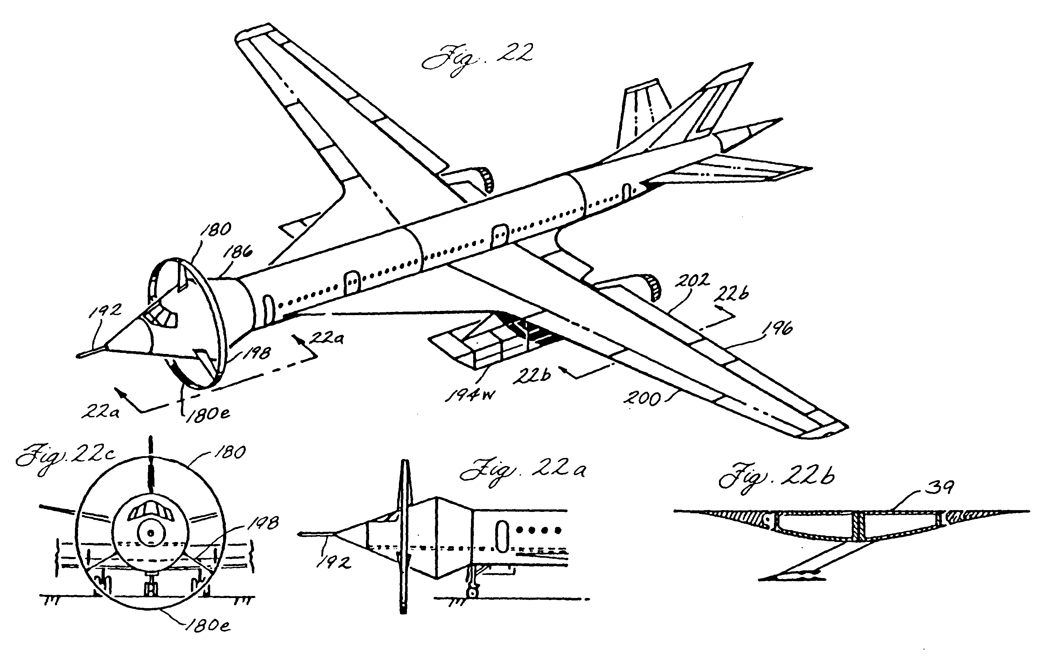

The pressure gradient mechanism in a deformed vortex 80 is further illustrated in FIG. 11, which displays its analogy with a conventional supersonic nozzle. In this figure a linear supersonic nozzle 82 is shown where the flow is compressed in its throat O-A, providing an increase in pressure with a corresponding decrease in velocity. If this nozzle 82 were wrapped around its center O into a circular nozzle 80 as indicated, the transformation would represent the deformed circular nozzle 80 described.

Vortex deformation effects are illustrated in FIG. 12. The upper sketch shows the deformed vortex 80 together with a plot of its vertical variations in velocity 90 and pressure 92. The middle plot illustrates the velocity distributions of the upper 80u and lower 80ℓ regions of the vortex 80. The lower plot shows the pressure distributions of the two regions 80u and 80ℓ in a similar manner.

The two further reflection factors imposed by the real fluid boundary conditions, vortex spreading and vortex deformation, may be examined in a quantitative manner by deriving a mathematical representation, based on substitution of the flow potential into these new boundary conditions and solving for the resulting reflection.

Such a derivation results in a new General Reflection Coefficient R as shown in FIG. 13, presenting reflection from the real fluid shear layer as a function of the geometric and flow variables, expressing this reflection as the sum of three terms, namely:
- **Classical 102 -**: the effect of an idealized infinitesimal thickness layer
- **Pressure Gradient 104 -**: the effect of the deformed real fluid vortices
- **Spreading 106 -**: diverging surface effect due to vortex growth

In addition to the classical term 102, two new terms, "pressure gradient 104" and "spreading 106" now appear, one for each real fluid boundary condition, pressure 50rf and flow direction 51rf. The factors in this equation are defined as follows:

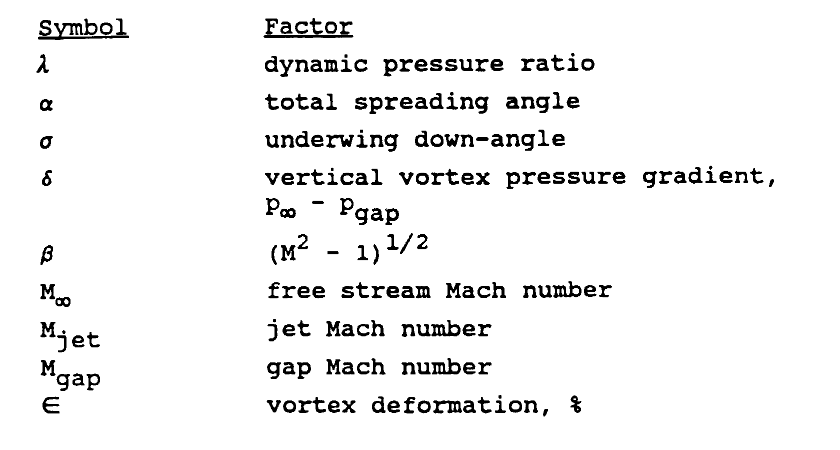

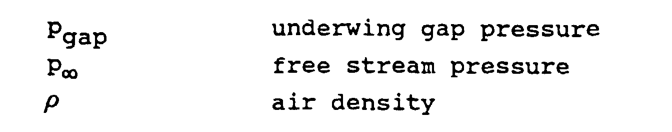

The spreading, or vortex growth term 106, depends only on the angles α and σ, and the dynamic pressure ratio λ. The underwing down angle σ is negative, so the spreading pressure contribution is positive. Its increase in pressure is achieved primarily by deflection of the flow due to the upwards inclined boundary, as shown in FIG. 8 previously.

The pressure gradient term 104 depends primarily on the pressure difference 6 between the underwing gap flow M_{gap} and the external free stream M_{∞} , which is the vertical pressure gradient P_{∞} - P_{gap} across the shear layer leading to vortex deformation, as illustrated previously in FIG. 12. This pressure gradient will be sustained by the internal vortex structure, which balances the centrifugal force within the deformed vortex by the pressure gradient. In a precise model the gradient will appear in the stream direction or inclined plane of the underwing vortex flap, with both vertical and horizontal components. The horizontal component will transport the pressure aft, providing a longer effective wing chord.

The plots in the lower portion of FIG. 13 illustrate the dependence of the reflection coefficient R on its three terms. The classical term 102 is presented in standard textbooks, and provides only a modest reflection. The pressure gradient 104 and spreading 106 terms are the contributions of the real fluid boundary conditions provided by the present invention. These contributions appear considerably larger than the classical term 102 for reasonable values of the parameters shown, illustrating the major gains in performance achieved by the new shock-free supersonic system of this invention.

The enhancement provisions of the present invention are based on imparting a pressure pulse into the flow at a frequency related to the natural frequency of the eddy formation on the jet interfaces. The excitation frequency may be the same as the natural frequency, or some harmonic thereof. The excitation provisions may be acoustic, electrical, mechanical, geometric, laser, or any other oscillation means such as to emit a pressure perturbation into the flow in a manner as to induce resonance in the interface eddies, providing an unstable internal structure to cause the eddies to merge, pair, and grow rapidly in the streamwise direction. FIGURE 14 illustrates several possible electromechanical mechanisms for imparting this excitation pulse.

FIGURE 14A illustrates a pulse mechanism 140 mounted in the top wall of the manifold throat 142 to emit a pressure pulse downwards from a plunger into the manifold internal flow; FIGURE 14C has a similar plunger 140 internally mounted to pulse a flexible membrane 144. FIGURE 14B shows a pulse mechanism 140 similarly located but oriented to emit the pulse aft. FIGURE 14D illustrates an excitation mechanism 140 to emit a pulse into the gap flow 42 above the manifold. FIGURE 14E illustrates a stepped upper inside surface 148 in the nozzle to impart vorticity by local separation selectively in the upper surface shear layer.

Acoustic excitation mechanisms could also be provided in the manifold in similar locations, primarily in the upper section of the planar nozzle 40 to selectively excite the jet stream 36 on its upper interface 37u.

A notch 146 in the upper wall of the manifold 40 would also serve as an excitation mechanism, and would have the advantage of being a passive structure, operating like a whistle. Variable width of the notch would be incorporated to control its frequency.

The excitation mechanisms could also be located on the forward underwing surface 39f, ahead of the compression field, so that its excitation pulses would interact with the upper jet interface in conjunction with the compression waves 43 to enhance the vortex growth.

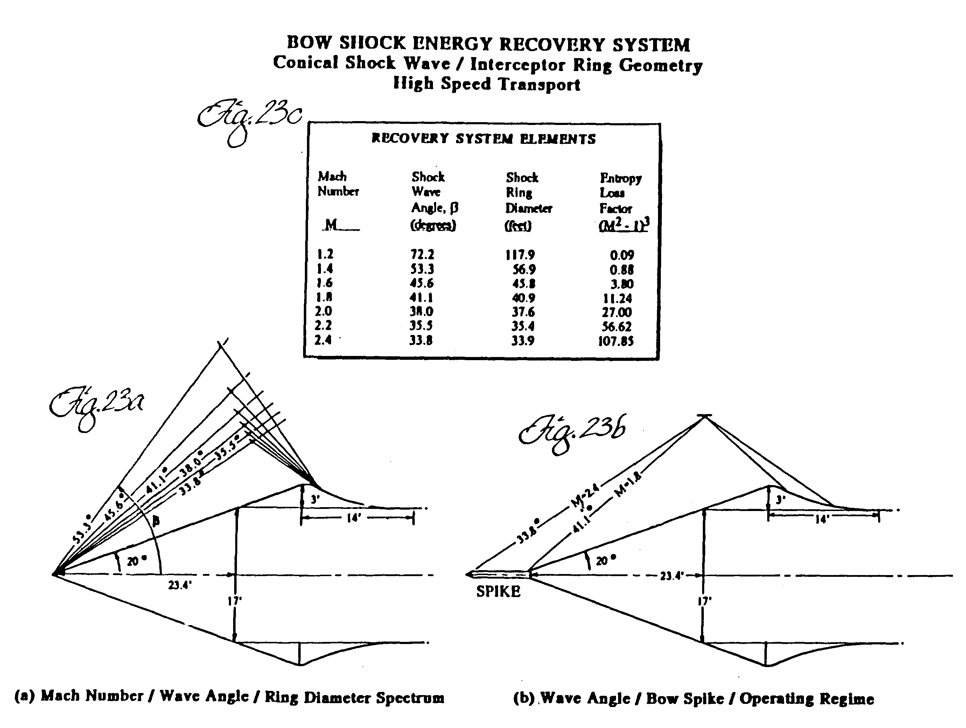

FIGURES 15a-h illustrate schematically the vortex pairing character provided by the excitation mechanism disclosed. In this sketch the vortices formed on the upper jet interface 37u between the underwing gap flow 42 and the jet flow 36 are numbered in sequence as they emerge from the nozzle 40. The excitation mechanism 41 then emits pressure pulses at the same rate, i.e., the same frequency or some harmonic thereof, to depress every other vortex, alternating between overpressure and underpressure, causing the vortex pair to rotate. As succeeding vortex pairs emerge, the continuing vortex rotation leads to their pairing and providing a streamwise growth structure. From another point of view the excitation provisions within the nozzle 40 will cause the jet 36 to emerge with an alternating underpressure and overpressure, which with proper harmonic sequencing, will generate the vortex rotation and pairing mechanism described.

The receiver 54 could be located downstream of the jet nozzle, say on the wing undersurface, as shown in FIG. 5, to detect the emerging frequency of the interface vortices, and transmit this data to control the frequency of the exciter 41.

The two circulation reaction systems -- shock-generating and enhanced shock-free -- are compared in FIG. 16. The shock-generating system of FIG. 16A has a negative wake 34m; the shock-free system of FIG. 16B has a positive wake 34p. The shock-generating system produces opposing circulation reactions, both positive and negative, operating at cross purposes, involving energy dissipations several times that required to produce a net negative circulation reaction to balance the positive wing circulation +Γ_{w}. This energy drain, since it is extracted from the flow at the price of wave drag, is particularly severe on performance.

The shock-free system, on the other hand, has a positive wake 34p, which nevertheless has a negative slope of its velocity profile, the integral of which is the required negative circulation reaction -Γᵣ. Further, by employing a flat upper wing surface 39u, lift generation that would produce an adverse reaction is avoided. The system thereby employs minimum energy to generate only the negative circulation reaction -Γ_{ℓ} required in the lower wing gap flow, aside from a small positive reaction +Γ_{b} due to the jet bottom interface. Furthermore, the negative circulation reaction provided by this positive wake is generated by residual energy from the propulsion system, with no adverse effect on performance.

The improved shock-free system described above is directed towards employing enhancement provisions to force the transformation of residual linear jet energy into rotational form completely within the wing chord length. Such provision of the complete negative circulation reaction results in recovery of the underwing compression energy into increased pressure on the wing backside, as shown in the paragraphs above.

The jet/vortex array assembly will extend aft far beyond the wing as shown in FIGS. 17a and 17b, and will be deflected downwards by the underwing pressure while within the Mach wedge extending from the wing trailing edge. Thereafter this assembly will be gradually deflected back towards the horizontal by the free stream below, thereby providing a much longer effective wing chord to spread the downward momentum over an increased mass of air to improve the left efficiency.

In the forward region exposed to the underwing lift pressure, downward deflection of the vortex assembly possibly would generate compression waves 150 having a forward perturbation velocity (compression) 152 as long as the assembly is within the wing Mach wedge, as shown in FIG. 17. These compression waves would normally coalesce into a strong shock wave extending to the ground and cause a sonic boom. However, with the positive wing circulation completely balanced by the negative jet vortex circulation reaction, further negative circulation such as would be produced by shock waves cannot arise in the flow. Hence generation of further shock waves in the flow below this assembly is not possible.

The answer to this paradox is illustrated in this figure, showing that the induced aft velocity (expansion) 154 of the dominant upper interface vortices 37u cancels the forward perturbation velocity 152 associated with the compression waves 150, generating a rotation-free downward momentum to provide lift but not allowing the compression waves to coalesce into a shock wave. Hence there is no shock wave extending to the ground to cause a sonic boom. Instead the weight of the aircraft appears on the ground as a long, smooth, low pressure footprint 156 extending far aft of the wing.

FIGURE 18 illustrates another point of view regarding the jet/vortex flap assembly mechanism in the region aft and below the wing. As shown in this figure, the vortex flap assembly 37u is discharged aft from the wing with a velocity increment to provide thrust, but which after substantial mixing as shown has only a modest residual velocity. Thus after discharge the flap has essentially no horizontal motion, i.e., it is simply laid down as the wing passes. If it were attached to the wing, it would have a high velocity relative to the outside stream. But it is not attached to the wing, and has essentially zero velocity relative to the outside air into which it is discharged. Hence this flap will generate no waves.

In a sense the mechanism thus transforms a supersonic wing into a subsonic vortex array having an effective Mach number 160 of zero. The vortex flap 37u will be deflected downwards by the underwing pressure, and will in turn push down the outer fluid. So linear downward momentum is imparted to the air below, providing lift, but no waves are generated associated with rotational momentum.

Again this model spreads the downward momentum over a much longer effective wing chord 162, which in turn spreads the pressure corresponding to the weight of the aircraft smoothly over a much longer footprint 156 on the grounds with no sonic boom.

In summary, the wing energy recovery system described above provides the three mechanisms set out below acting in a synergistic manner to increase the pressure on the upwards reflexed wing backside and so produce thrust and useful work to benefit aircraft efficiency:
- Underwing Compression Wave Reflection recovers wave compression into useful work this recovered energy appears as pressure on wing backside
- Jet Augmentation
   spreads jet linear momentum over increased mass of air
   this mixing transforms linear momentum into rotational form
   reduced mixed stream velocity augments pressure on wing backside
- Jet Flap
   increased underwing gap pressure inclines shear layer downward compresses and deforms shear layer vortices
   deformed vortex internal structure sustains pressure gradient
   this gradient has vertical and horizontal components
   spreads lift momentum over longer effective wing chord
   results in increased pressure on wing backside

Wave drag of the fuselage may also be alleviated by application of the reflection principles described. FIG. 19 illustrates a corporate jet aircraft having a cowl or jet manifold 170 mounted above the forward fuselage, which reflects the upwards oriented fuselage bow wave back downward to provide an increased pressure and thrust on the aft side of the bump region 172 on the upper fuselage surface, thereby recovering into useful work the otherwise wasted bow wave energy.

The upswept aft underside of an aircraft fuselage is usually a region of low pressure and hence high drag. A further jet manifold 174 forward of this surface to emit a jet aft, employs the excitation provisions as disclosed herein, to enhance vortex growth on the upper interface of this jet to provide a high pressure and hence a thrust on the lower fuselage backside 176.

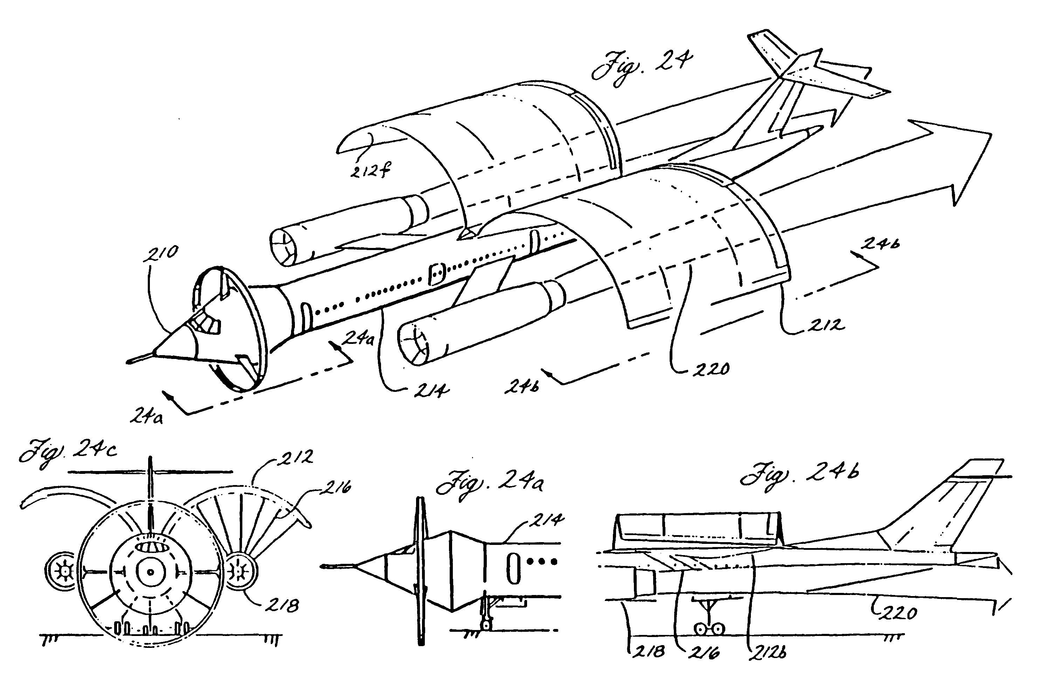

The cowl of FIG. 19 may be extended completely around the fuselage, and may include a manifold ring 180 to emit a jet flap 182 as illustrated in FIG. 20. This figure displays a circular fuselage 184 with a shoulder 186 completely around its perimeter to recover the axisymmetric conical bow shock 188 into forward thrust T and useful work. An extendable, forward, shock wave control spike 192 is also shown to locate the shock 188 on the manifold ring 180 properly for reflection recovery at off-design conditions.

A corporate size aircraft with such a bow shock reflection ring 180, nose spike 192, and inward inclined energy recovery shoulder 186 is shown in FIG. 21, with tail mounted engines 194t. The figure also illustrates that recovery of the wing shock wave energy as outlined hereinbefore permits the use of a large-span modest-sweep wing 196, providing empowered take-off and landing characteristics and less induced drag at both subsonic and supersonic speeds. The bow shock ring 180 is mounted on a plurality of struts 198 such that the lower portion of the ring 180ℓ may be folded upwards for take-off and landing.

FIG. 22 illustrates similar principles to those herinbefore described, applied to a transport size aircraft. The engines 194w in this case are mounted under the wing.

Operation of the conical bow shock wave control spike 192 is shown in FIG. 23, presenting a Mach number Table showing for a conventional wide-body transport fuselage the ring diameters required for compression energy recovery on the fuselage shoulder. This wave angle/ring diameter geometry is illustrated in FIG. 23(a). The extendable nose spike accordingly is arranged as shown in FIG. 23(b) to locate the conical bow wave on a 12.47 m (40.9 foot) diameter ring over a flight range of 2864 km/h (Mach 2.4) down to 2148 km/h (Mach 1.8), thereby avoiding larger rings for lower Mach numbers where the entropy loss is small. The system then intercepts the conical bow shock wave and recovers its energy even at off-design Mach numbers.

The wing section 39, as shown in FIG. 5, has a flat upper surface 39u that generates no lift at supersonic speed when operating parallel to the free stream. However, the wing is provided with leading 200 and trailing 202 edge flaps as shown in FIGS. 21 and 22, which do produce lift on the upper surface when extended at low subsonic speeds particularly for take-off and landing. The underwing jet 36 may also be employed to increase lift during take-off by blowing the extended trailing edge flaps 202. Further, this dispersion of the propulsive jet will decrease noise at take-off.

The spanwise underwing jet disclosed in this application may be continuous or intermittent. The aircraft illustrated in FIGS. 21 and 22 display a continuous spanwise manifold emitting a jet across essentially the entire span of the wing and continuing uninterrupted under the fuselage.

The underwing jet alternatively may be provided in an intermittent manner, say in the form of discrete segments, and in conjunction with a wing shaped to focus the compression waves on those discrete jet segments. FIG. 24 illustrates a transport size aircraft 210 having a wing 212 concave down spanwise on both sides of the fuselage 214 to incline the wing compression waves 216 generated by the forward wing undersurface 212f inwards onto the underwing engines 218 and their exhaust streams 220. The exhaust streams 220 then serve as these discrete jet segments to intercept and reflect the underwing compression waves 216 back to the upwards reflected wing backside 212b to recover their energy into useful work.

## Claims

1. A compression wave energy control system for a supersonic winged aircraft said control system comprising a nozzle (40) emitting a jet (36) arranged to be located below and apart from the wing (39) of the aircraft so as to intercept a compression wave from the wing (39) and form a gap flow (42) between the underside of the wing (39) and the jet (36) characterised by enhancement means (41) located in said nozzle (40) to emit pressure pulses of the same or harmonic frequency with a natural frequency of the interface eddies produced in an upper interface between the gap flow (42) and the jet emerging from said nozzle (40) to induce rotation of adjacent vortex pairs in said interface eddies to selectively increase the fluid mixing growth of the upper interface of the jet (36) to provide an asymmetric shear layer.

2. A system according to Claim 1, characterised in that the pressure impulses imposed by the enhancement means are at an angle providing a component perpendicular to the stream direction of the jet (36), the frequency of the pressure impulses being harmonically related to the rate at which vortices are shed to depress every second vortex of each generated vortex pair.

3. A system according to Claim 1 or to Claim 2, characterised in that the jet (36) from said nozzle (40) is asymmetric.

4. A system according to Claim 3, characterised by means for causing negative, counter clockwise, vortices in the larger upper interface of said asymmetric jet (36) to provide the angular momentum reaction to the positive, clockwise, lifting circulation.

5. A system according to Claim 4, characterised by a sensor (54) located aft of said nozzle (36) to detect the frequency of vortices generated by said upper interface mixing, and control means responsive to said sensor (54) to control said enhancement means (41) to create a resonant response at the frequency detected by the sensor.

6. A system according to any preceding claim, characterised in that the wing (39) includes an upwards reflexed backside (39b) serving as a jet augmentation shroud to improve the propulsive efficiency of the underwing jet (36) due to this enhanced mixing and its spreading the jet momentum over an increased mass of fluid.

7. A system according to any preceding claim, characterised in that the nozzle (40) emits a planar jet (36) and the enhancement means (41) are located in an upper wall of the planar jet nozzle (40).

8. A system according to any preceding claim, characterised by the enhancement means (41) causing the nozzle (40) to induce enhanced vortex growth such as to provide a restriction to the flow channel between the wing (39) and a manifold (40) to increase the pressure generation in the gap flow.

9. A system according to any one of Claims 1 to 5, characterised in that the upper wing surface (39u) is substantially flat.

10. A system according to any preceding claim, characterised in that the jet/vortex assembly extends far aft of the wing trailing edge (31) comprising an increased effective wing chord to spread the downward momentum over a greater mass of fluid to minimize its energy loss.

11. A system according to any preceding claim, characterised by means for controlling the enhanced negative circulation reaction of the underwing jet/vortex array essentially in a sense to balance the positive wing circulation, so as to preclude generation of further negative circulation and to implement shock waves in the flow field below, thereby to avoid generation of a sonic boom.

12. A system according to any preceding claim in combination with an aircraft, the aircraft being characterized by a fuselage (184) having a forward bow and an inward inclined shoulder (186) on at least a portion of the fuselage, with a bow ring (180) mounted around at least a portion of the fuselage bow to intercept and reflect the shock wave formed by the fuselage bow aft onto the inward inclined shoulder for pressure recovery.

13. A system in combination with an aircraft according to Claim 12, characterized in that the bow ring contains a nozzle arranged to emit an energized jet (182) aft and inwards to provide a jet flap to contain the pressure of the reflected shock wave.

14. A system in combination with an aircraft according to Claim 12 or to Claim 13, characterized by an extendable nose spike (192) on the fuselage to control the pattern of the bow shock wave generated by the fuselage.

15. A system according to any of Claims 1 to 11 in combination with an aircraft, the aircraft being characterized by a fuselage having an upward reflexed aft portion (176) and a jet manifold (174) mounted under the fuselage to emit a supersonic jet with enhancement means to increase vortex growth by inducing rotation of vortex pairs and reflecting a shock wave to develop positive pressure on the upward reflexed fuselage aft portion.

16. A system according to any one of Claims 1 to 11 in combination with an aircraft, the aircraft being characterized by a plurality of jet engines (218) mounted under the wing (212), the wing having a concave down spanwise shape to focus compression waves from an undersurface of the wing onto the exhaust stream (220) from the engines to reflect the compression waves to an upwards reflexed backside (212b) on the wing.

## Patentansprüche

1. Verdichtungswellenenergiesteuereinrichtung für ein mit einem Überschalltragflügel versehenen Luftfahrzeug mit einer einen Strahl (36) abgebenden Düse (40), die zum Anordnen unterhalb und mit einem Abstand von dem Tragflügel (39) des Luftfahrzeuges eingerichtet ist, so daß eine Druckwelle von dem Tragflügel (39) abgehalten ist und zwischen der Unterseite des Tragflügels (39) und dem Strahl (36) eine spaltartige Strömung (42) ausgebildet ist, **gekennzeichnet durch** in der Düse (40) angeordnete Verbesserungsmittel (41) zum Abgeben von Druckimpulsen bei der gleichen oder einer mit der natürlichen Frequenz von in einer oberen Grenzfläche zwischen der spaltartigen Strömung (42) und dem aus der Düse (40) austretenden Strahl erzeugten Grenzflächenwirbel harmonisch verbundenen Frequenz, um eine Rotation von benachbarten Wirbelpaaren in den Grenzflächenwirbel hervorzurufen, um selektiv die Zunahme der Fluidmischung der oberen Grenzfläche des Strahles (36) zum Erzielen einer asymmetrischen Scherschicht zu erhöhen.

2. Einrichtung nach Anspruch, dadurch gekennzeichnet, daß die durch die Verbesserungsmittel erzwungenen Druckimpulse unter einem eine Komponente rechtwinklig zu der Strömungsrichtung des Strahles (36) aufweisenden Winkel auftreten, wobei die Frequenz der Druckimpulse harmonisch mit der Rate verbunden ist, bei der Wirbel zum Unterdrücken jedes zweiten Wirbels jedes erzeugten Wirbelpaares abgelöst sind.

3. Einrichtung nach Anspruch 1 oder Anspruch 2, dadurch gekennzeichnet, daß der Strahl (36) aus der Düse (40) asymmetrisch ist.

4. Einrichtung nach Anspruch 3, gekennzeichnet durch Mittel zum Hervorrufen von negativen, sich gegen den Uhrzeigersinn drehenden Wirbeln in der größeren oberen Grenzfläche des asymmetrischen Strahles (36), um eine Drehimpulsreaktion zu der positiven, sich im Uhrzeigersinn drehenden, nach oben gerichteten Zirkulation zu schaffen.

5. Einrichtung nach Anspruch 4, gekennzeichnet durch einen strömungsrückseitig zu der Düse (36) angeordneten Sensor (54), um die Frequenz der durch die Mischung an der oberen Grenzfläche erzeugten Wirbel zu detektieren, und durch an den Sensor (54) angeschlossene Steuermittel zur Steuerung der Verbesserungsmittel (41), um eine resonante Antwort bei der durch den Sensor detektierten Frequenz zu erzeugen.

6. Einrichtung nach einem der voranstehenden Ansprüche, dadurch gekennzeichnet, daß der Tragflügel (39) eine nach oben zurückgebogene Rückseite (39b) aufweist, die als Strahlvergrößerungsabdeckung wirkt, um den Vorschubwirkungsgrad des Unterflügelstrahles (36) aufgrund der erhöhten Mischung und der Verteilung des Strahlimpulses über eine vergrößerte Fluidmasse zu verbessern.

7. Einrichtung nach einem der voranstehenden Ansprüche, dadurch gekennzeichnet, daß die Düse (40) einen ebenen Strahl (36) abgibt und die Verbesserungsmittel (41) an einer oberen Wand der den ebenen Strahl erzeugenden Düse (40) angeordnet sind.

8. Einrichtung nach einem der voranstehenden Ansprüche, gekennzeichnet durch Verbesserungsmittel (41), die die Düse (40) zum Induzieren eines erhöhten Wirbelwachstums veranlassen, so daß eine Eingrenzung auf den Strömungskanal zwischen dem Tragflügel (39) und einer Rohranordnung (40) zum Erhöhen der Druckerzeugung in der spaltartigen Strömung zu schaffen.

9. Einrichtung nach einem der Ansprüche 1 bis 5, dadurch gekennzeichnet, daß die obere Tragflügeloberfläche (39u) im wesentlichen flach ist.

10. Einrichtung nach einem der voranstehenden Ansprüche, dadurch gekennzeichnet, daß die Strahl/Wirbelanordnung sich strömungsrückseitig weit hinter die eine erhöhte effektive Tragflügelsehne aufweisende Tragflügelhinterkante (31) erstreckt, um den abwärts gerichteten Impuls zum Minimieren der Energieverluste über eine größere Fluidmasse zu verteilen.

11. Einrichtung nach einem der voranstehenden Ansprüche, gekennzeichnet durch Mittel zur Steuerung der erhöhten negativen Zirkulationsreaktion des unterflügeligen Strahl/Wirbelfeldes im wesentlichen derart, daß die positive Tragflügelzirkulation ausgeglichen ist, so daß die Erzeugung von weiterer negativer Zirkulation behindert ist und Schockwellen in dem darunterliegenden Strömungsfeld implementiert sind, so daß die Erzeugung eines Überschallknalles vermieden ist.

12. Einrichtung nach einem vorangehenden Anspruch in Verbindung mit einem Luftfahrzeug, wobei das Luftfahrzeug durch einen Rumpf (184) gekennzeichnet ist, der an wenigstens einem Abschnitt des Rumpfes einen Vorbugkörper sowie eine nach innen gewölbte Schulter (186) aufweist und über einen um wenigstens einen Abschnitt des Rumpfbugkörpers angebrachten Bugring (180) verfügt, um die Schockwelle, die durch das Heckteil des Rumpfbugkörper gebildet ist, aufzufangen und in Richtung der nach innen gewölbten Schulter zur Druckrückgewinnung umzuleiten.

13. Einrichtung in Verbindung mit einem Luftfahrzeug nach Anspruch 12, dadurch gekennzeichnet, daß der Bugring eine Düsenanordnung umfaßt, die zum Emittieren eines energieangereicherten Strahles (182) strömungsrückseitig nach achtern und nach innen eingerichtet ist, um eine Strahlflanke zum Bewahren des Druckes der umgeleiteten Schockwelle zu schaffen.

14. Einrichtung in Verbindung mit einem Luftfahrzeug gemäß Anspruch 12 oder Anspruch 13, gekennzeichnet durch eine in ihrer Länge veränderbare Nasenspitze (192) an dem Rumpf, um das Muster der durch den Rumpf erzeugten Bugschockwelle zu beeinflussen.

15. Einrichtung nach einem der Ansprüche 1 bis 11 in Verbindung mit einem Luftfahrzeug, wobei das Luftfahrzeug durch einen Rumpf gekennzeichnet ist, der einen nach oben zurückgebogenen Heckabschnitt und eine unter dem Rumpf angebrachte Strahlrohranordnung (174) aufweist, um mit Verbesserungsmittel einen Überschallstrahl zu emittieren, um das Wirbelwachstum durch Induzieren einer Drehung eines Wirbelpaares und Umleiten einer Schockwelle zum Erzeugen eines positiven Druckes an dem nach oben zurückgebogenen Rumpfheckabschnitt zu erhöhen.

16. Einrichtung nach einem der Ansprüche 1 bis 11 in Verbindung mit einem Luftfahrzeug, wobei das Luftfahrzeug durch eine Anzahl von Strahltriebwerken (218) gekennzeichnet ist, die unter dem Flügel (212) angebracht sind, wobei der Flügel in Spannweitenrichtung eine konkav abwärts gewölbte Gestalt aufweist, um Druckwellen von einer Unterseite des Flügels in den Abgasstrahl (220) der Triebwerke zu bündeln, um die Druckwellen zu einer nach oben zurückgebogenen Rückseite (212b) des Flügels umzulenken.

## Revendications

1. Système de contrôle de l'énergie d'une onde de compression pour un aéronef ailé supersonique, ledit système de contrôle comprenant une tuyère émettant un jet (36) agencé pour être situé sous l'aile (39) de l'aéronef et à distance de celle-ci de façon à intercepter une onde de compression provenant de l'aile (39) et à former un flux d'intervalle (42) entre la face inférieure de l'aile (39) et le jet (36), caractérisé par des moyens de renforcement (41) disposés dans ladite tuyère (40) pour produire des impulsions de pression dont la fréquence est égale à ou harmonique de la fréquence naturelle des tourbillons d'interface produits dans une interface supérieure entre le flux d'intervalle et le jet provenant de la tuyère (40) pour induire une rotation des paires de vortex adjacents dans les tourbillons d'interface pour sélectivement augmenter la croissance du mélange des fluides de l'interface supérieure du jet (36) afin de produire une couche de cisaillement asymétrique.

2. Système selon la revendication 1, caractérisé en ce que les impulsions de pression imposées par les moyens de renforcement sont à un angle fournissant une composante perpendiculaire à la direction d'écoulement du jet (36), la fréquence des impulsions de pression étant reliée harmoniquement à la vitesse à laquelle les vortex sont relâchés pour abattre tous les seconds vortex de chaque paire de vortex générés.

3. Système selon la revendication 1 ou la revendication 2, caractérisé en ce que le jet (36) provenant de la tuyère (40) est asymétrique.

4. Système selon la revendication 3, caractérisé par des moyens pour provoquer des vortex négatifs tournant en sens anti-horaire dans l'interface supérieure large dudit jet asymétrique (36) afin d'engendrer la réaction de moment cinétique à la circulation positive de sustentation, tournant en sens horaire.

5. Système selon la revendication 4, caractérisé par un capteur (54) disposé à l'arrière de la tuyère (40) pour détecter la fréquence des vortex engendrés par le mélange de l'interface supérieure, et des moyens de commande sensibles au capteur (54) pour commander les moyens de renforcement (41) afin de créer une réponse résonante à la fréquence détectée par le capteur.

6. Système selon l'une des revendications précédentes, caractérisé en ce que l'aile (39) comprend une partie arrière ascendante de réflexion (39 b) servant de carénage d'augmentation de jet afin d'améliorer l'efficacité de propulsion du jet sous aile (36) dû à ce mélange renforcé et l'étalement du moment du jet sur une masse augmentée de fluide.

7. Système selon l'une des revendications précédentes, caractérisé en ce que la tuyère (40) émet un jet planaire (36) et en ce que les moyens de renforcement (41) sont disposés dans une paroi supérieure de la tuyère (40) à jet planaire.

8. Système selon l'une des revendications précédentes, caractérisé en ce que les moyens de renforcement (41) amènent la tuyère (40) à induire une croissance augmentée de vortex, de façon a provoquer une restriction du canal de flux entre l'aile (39) et un collecteur (40) pour augmenter la génération de pression dans le flux d'intervalle.

9. Système selon l'une des revendications 1 à 5, caractérisé en ce que la surface supérieure de l'aile (39 u) est substantiellement plate.

10. Système selon l'une des revendications précédentes, caractérisé en ce que l'ensemble jet/vortex s'étend loin en arrière du bord de fuite (31) de l'aile comprenant une corde d'aile efficace pour étaler le moment descendant sur une plus grande masse de fluide afin de minimiser sa perte d'énergie.

11. Système selon l'une des revendications précédentes, caractérisé par des moyens pour contrôler la réaction renforcée de circulation négative de la zone sous aile de jet/vortex essentiellement pour compenser la circulation positive d'aile, de façon à prévenir une génération de circulation négative supplémentaire et à réaliser des ondes de choc dans le champ de flux inférieur, afin d'éviter la génération d'un bang supersonique.

12. Système selon l'une des revendications précédentes en combinaison avec un aéronef, l'aéronef étant caractérisé par un fuselage (184) ayant un nez avant et un épaulement (186) incliné vers l'intérieur sur au moins une portion du fuselage, avec un anneau de nez (180) monté autour d'au moins une portion du nez de fuselage pour intercepter et réfléchir l'onde de choc formée par l'arrière du nez de fuselage sur l'épaulement incliné vers l'intérieur, pour la récupération de la pression.

13. Système en combinaison avec un aéronef selon la revendication 12, caractérisé en ce que l'anneau de nez comprend une tuyère agencée pour émettre un jet stimulé (182) vers l'arrière et vers l'intérieur pour constituer un volet fluide, afin de contenir la pression de l'onde de choc réfléchie.

14. Système en combinaison avec un aéronef selon la revendication 12 ou la revendication 13, caractérisé par une pointe de nez extensible (192) sur le fuselage pour contrôler le profil de l'onde de choc de nez engendrée par le fuselage.

15. Système selon l'une des revendications 1 à 11 en combinaison avec un aéronef, l'aéronef étant caractérisé par un fuselage ayant une portion arrière ascendante de réflexion (176) et un collecteur de jet (174) monté sous le fuselage pour émettre un jet supersonique, avec des moyens de renforcement pour augmenter la croissance de vortex en induisant une rotation des paires de vortex et en réfléchissant l'onde de choc, afin de développer une pression positive sur la portion arrière ascendante de réflexion du fuselage.

16. Système selon l'une des revendications 1 à 11 en combinaison avec un aéronef, l'aéronef étant caractérisé par une pluralité de moteurs à réaction (218) montés sous l'aile (212), l'aile ayant un profil d'envergure à concavité tournée vers le bas pour faire converger les ondes de compression depuis la surface inférieure de l'aile sur les flux d'échappement (220) des moteurs, afin de réfléchir les ondes de compression vers une partie arrière ascendante de réflexion (212b) de l'aile.
